# EUROPÄISCHE PATENTSCHRIFT

(11) **EP 4 093 569 B1**
(45) Veröffentlichungstag und Bekanntmachung des Hinweises auf die Patenterteilung: **05.03.2025**
(21) Anmeldenummer: 21703829.8
(22) Anmeldetag: 21.01.2021
(51) Int. Cl.: B23B 31/08, B23G 1/46, B23B 31/12, B23B 31/00

(54) **GEWINDESCHNEIDFUTTER**
TAPPING CHUCK
MANDRIN PORTE-TARAUD

(30) Priorität: 24.01.2020 DE 102020000411
(43) Veröffentlichungstag der Anmeldung: 30.11.2022
(73) Patentinhaber: Hakki, Aygün, 72505 Krauchenwies (DE)
(72) Erfinder: Hakki, Aygün, 72505 Krauchenwies (DE)
(74) Vertreter: Stadler, Franz
(86) Internationale Anmeldenummer: PCT/EP2021/000006
(87) Internationale Veröffentlichungsnummer: WO 2021/148235

(56) Entgegenhaltungen:
- EP-A1- 3 238 867
- EP-A1- 3 513 891
- EP-B1- 2 650 068
- DE-A1- 102017 106 409
- DE-A1- 19 736 891
- DE-U1- 202015 102 119
- DE-U1- 8 122 325
- GB-A- 563 781
- SE-B- 454 332
- US-A- 4 752 165
- US-A- 5 816 584
- US-A1- 2009 209 356
- US-A1- 2018 056 401
- US-B1- 7 641 202

## Beschreibung

Die vorliegende Erfindung betrifft ein Gewindeschneidfutter zum Synchron-Gewindeschneiden gemäß dem Oberbegriff des Anspruches 1, das aus dem Dokument DE 10 2017 106 409 A1 bekannt ist.

Beim Gewindeschneiden wird mit einem Gewindebohrer in ein Werkstück ein Gewinde eingearbeitet bzw. eingeschnitten. Das Gewinde des Gewindebohrers weist eine bestimmte Steigung auf. Entsprechend der Steigung des Gewindebohrers ist es notwendig, während des Einschneidens des Gewindes den Gewindebohrer in einer Axialrichtung als einer Translationsbewegung zu bewegen und dies wird von einem maschinenseitigen Antrieb, insbesondere einer CNC-Werkzeugmaschine, ausgeführt. Darüber hinaus führt der Gewindebohrer auch eine Rotationsbewegung in einer bestimmten Drehrichtung zum Einschneiden des Gewindes auf. Die Translationsgeschwindigkeit wird auch als Vorschubgeschwindigkeit bezeichnet und diese hängt von der Steigung des Gewindebohrers ab. Bei CNC-Werkzeugmaschinen synchronisiert ein Computer den Gewindeschneidprozess dahingehend, dass die Maschinenlinearbewegung als der Axialbewegung und die Maschinendrehbewegung als der Dreh- oder Rotationsbewegung von entsprechenden Impulsgebern erfasst wird. Dabei kann jedoch die Genauigkeit der Maschinendrehbewegung und der Maschinenlinearbewegung nicht ganz genau erfasst werden und auch bei der Herstellung des Gewindes treten für die Steigung des Gewindebohrers Abweichungen auf. Eine genaue Synchronisierung des Vorschubs der Maschinenspindel bzw. des Gewindeschneidfutters zur Rotationsbewegung ist nicht ganz genau möglich.

Um das Auftreten von großen Axialkräften an dem Gewindeschneidfutter in Zug- und Druckrichtung, insbesondere beim Reversieren, das heißt beim Umkehren der Drehbewegung am Ende des Gewindeschneidprozesses zum Herausdrehen des Gewindebohrers, zu verhindern, ist es bereits bekannt, mit Elastomerelementen eine Abfederung eines axialen Spiels in Axialrichtung des Gewindeschneidfutters und eines tangentialen Spiels in Drehrichtung des Gewindeschneidfutters zwischen einem Aufnahmeschaft und einer Spannvorrichtung für den Gewindebohrer aufgrund der elastischen Eigenschaften des Elastomerelements auszuführen. Das Elastomerelement weist dabei jedoch in zwei Axialrichtungen, die zueinander entgegengesetzt ausgerichtet sind, eine im Wesentlichen gleiche Federkonstante auf. Dies gilt in analoger Weise auch für zwei zueinander entgegengesetzt ausgerichtete Drehrichtungen. Beim Einschneiden eines Gewindes in eine Bohrung eines Werkstücks mit einem Gewindebohrer ist es jedoch im Allgemeinen notwendig und wünschenswert, für eine Optimierung des Gewindeschneidprozesses bei der Axialbewegung für die Zug- und Druckrichtung eine unterschiedliche Federkonstante des Elastomerelements zur Abfederung des axialen Spiels zur Verfügung zu haben. Dies gilt analog auch für die Drehrichtung, das heißt, für das Einschneiden in einer Drehrichtung und für die Drehrichtung entgegengesetzt hierzu nach dem Reversieren.

Gewindeschneidfutter umfassen Spannvorrichtungen zur Fixierung des Gewindebohrers. Synchronfutter umfassen Spannzangen und dabei ist es erforderlich, dass für Gewindebohrer in unterschiedlichen Größen bzw. Durchmessern des Gewindebohrers unterschiedliche Spannzangen vorgehalten werden müssen. Dadurch ist es in nachteiliger Weise erforderlich, bei einem Austausch von Gewindebohrern mit einer unterschiedlichen Größe in aufwendiger Weise die Spannzangen an der Spannvorrichtung auszutauschen und zusätzlich eine große Anzahl an Spannzangen für die unterschiedlichen Größen von Gewindebohrern vorzuhalten. Das ist aufwendig und teuer.

Ferner sind Hydrodehnspannfutter bekannt. Auch bei Hydrodehnspannfuttern ist es notwendig, für die unterschiedlichen Größen der Gewindebohrer die Reduzierbuchsen in den Hydrodehnspannfuttern auszuwechseln und eine entsprechend große Zahl an Reduzierbuchsen vorzuhalten. Hydrodehnspannfutter erfordern somit auch ein aufwendiges Wechseln der Reduzierbuchsen für Gewindebohrer in unterschiedlichen Größen und ferner sind aufgrund der konstruktiven Ausbildung der Hydrodehnspannfutter mit hydraulischen Vorrichtungen diese in der Herstellung aufwendig und teuer.

Die DE 10 2012 215 036 A1 und EP 2 650 068 B1 zeigen ein Hydrodehnspannfutter mit einem in einem Spannfutterkörper integrierten Hydrodehnspannmechanismus, der eine Dehnspannbuchse mit einer durchgehend zylindrischen Innenwand aufweist.

Die DE 23 41 642 C3 zeigt ein Spannfutter für Bohrer mit einem für die Befestigung an einer Arbeitsspindel vorgesehenen Futterkörper, an dem ein Spannglied mit schräg zur Futterachse verschiebbaren Spannbacken um die Futterachse drehbar gelagert ist.

Die EP 1 043 100 B1 zeigt ein Bohrfutter mit einem an einer Bohrspindel anschließbaren Futterkörper und mit zwischen sich eine Aufnahme für das Bohrwerkzeug bildenden, im Futterkörper geführten Spannbacken.

Die DE 84 29 380 U1 zeigt ein Gewindeschneidfutter mit einem zweiteiligen Futterkörper aus einem an eine Antriebsspindel anschließbaren Spindelanschlußstück und einem mit Spannbacken für das im Futter zu haltende Werkzeug versehenen Backenführungsstück, das mit dem Spindelanschlußstück druck- und zugfest durch ein Gelenk verbunden ist, in dem das Spindelanschlußstück und das Backenführungsstück durch die Kraft einer Feder normalerweise koaxial zueinander ausgerichtet, aber in ihrer Achsenrichtung gegeneinander kippbar sind, wobei am Futterkörper ein verstellbar geführtes Sperrglied vorgesehen ist, das in seiner Führung aus einer Lage, in der es die Kippbewegung zwischen dem Spindelanschlußstück und dem Backenführungsstück nicht behindert, in eine das Splndelanschlußstück und das Backenführungsstück starr miteinander verbindende Lage verstellbar ist.

Die EP 3 147 053 A1 zeigt ein Spannfutter zum Einspannen von Werkzeugen in eine Elektrohandwerkzeugmaschine mit einem Futterkörper und relativ zum Futterkörper bewegbaren Spannbacken sowie einem innerhalb des Futterkörpers aufgenommenen Einsatz, wobei der Einsatz wenigstens eine zentral angeordnete Mehrkant-Aufnahme zur Aufnahme und Verdrehsicherung eines korrespondierenden Mehrkant-Endabschnitts eines Gewindebohrers aufweist und wobei im montierten Zustand des Spannfutters der Einsatz unverlierbar innerhalb des Futterkörpers aufgenommen ist. Das Spannfutter weist kein Elastomerelement zur Abfederung eines axialen und tangentialen Spiels und keinen axialen und tangentialen Anschlag auf und ist damit für einen Antrieb mit einer CNC-Werkzeugmaschine nicht geeignet.

Die EP 2 650 068 B1 offenbart ein Hydrodehnspannfutter mit einem in einem Spannfutterkörper integrierten Hydrodehnspannmechanismus, der eine Dehnspannbuchse mit einer durchgehend zylindrischen Innenwand aufweist, und einer in der Dehnspannbuchse angeordneten Reduzierbuchse zur Aufnahme eines Schaftwerkzeugs, insbesondere Gewindebohrers, wobei die Reduzierbuchse durch ein Außenmehrkantprofil, das in einem Innenmehrkantprofil des Spannfutterkörpers formschlüssig aufgenommen ist, außenumfangsseitig formschlüssig drehfest mit dem Spannfutterkörper verbunden ist, wobei die Reduzierbuchse durch ein Innenmehrkantprofil zur formschlüssigen Aufnahme eines Außenmehrkantprofils am Schaftende des Schaftwerkzeugs innenumfangsseitig für eine formschlüssige drehfeste Verbindung mit dem Schaftwerkzeug ausgebildet ist, die Formschlussverbindung zwischen der Reduzierbuchse und dem Spannfutterkörper in axialer Richtung auf einen Längenendabschnitt der Reduzierbuchse beschränkt ist, und die Formschlussverbindung zwischen der Reduzierbuchse und dem Schaftwerkzeug in axialer Richtung auf einen Längenendabschnitt der Reduzierbuchse beschränkt ist

US 2018/0056401 A1 offenbart ein Spannfutter für einen Gewindebohrer mit einer Drehmomentbegrenzungsvorrichtung. Die Drehmomentbegrenzungsvorrichtung umfasst einen Drehmomentübertragungsmechanismus, welcher die Übertragung eines Drehmoments unterbricht, so dass der Drehmomentübertragungsmechanismus und damit auch der Gewindebohrer nicht mehr rotiert.

Die DE 197 36 891 A1 offenbart ein Bohrfutter für einen Bohrer.

Die SE 454 332 B zeigt ein Spannfutter mit oberen ersten Backen und zweiten unteren Backen als zwei Anordnungen von ersten und zweiten Backen. Die zwei Anordnungen von Backen sind mit einer elastischen Scheibe voneinander getrennt.

Die DE 81 22 325 U1 zeigt ein Gewindeschneidfutter.

Die Aufgabe der vorliegenden Erfindung besteht deshalb darin, ein Gewindeschneidfutter zum Synchron-Gewindeschneiden mit einer Spannvorrichtung zur Verfügung zu stellen, bei dem Gewindebohrer in unterschiedlichen Größen einfach an der Spannvorrichtung fixiert werden können ohne dass komplexe Teile der Spannvorrichtung ausgetauscht werden müssen.

Diese Aufgabe wird gelöst mit einem Gewindeschneidfutter zum Synchron-Gewindeschneiden, umfassend einen Aufnahmeschaft als Komponente des Gewindeschneidfutters zum maschinenseitigen Antrieb, ein Zwischenteil als Komponente des Gewindeschneidfutters, eine Spannvorrichtung als Komponente des Gewindeschneidfutters zur kraftschlüssigen Fixierung eines Gewindebohrers, wobei mit dem Zwischenteil der Aufnahmeschaft mit der Spannvorrichtung verbunden ist, wenigstens ein Elastomerelement zur Abfederung eines axialen Spiels in Axialrichtung des Gewindeschneidfutters und eines tangentialen Spiels in Drehrichtung des Gewindeschneidfutters zwischen dem Aufnahmeschaft und der Spannvorrichtung aufgrund der elastischen Eigenschaften des Elastomerelementes, einen axialen Anschlag zur Begrenzung des abgefederten axialen Spiels mit einem ersten Axialanschlagelement und einem zweiten Axialanschlagelement und einen tangentialen Anschlag zur Begrenzung des abgefederten tangentialen Spiels mit einem ersten Tangentialanschlagelement und einem zweiten Tangentialanschlagelement, eine Fixierungsvorrichtung zur formschlüssigen Fixierung des Gewindebohrers in Drehrichtung des Gewindebohrers an der Spannvorrichtung, wobei die Spannvorrichtung drei in Radialrichtung mit einem Spannmechanismus bewegliche Spannbacken zur kraftschlüssigen Fixierung des Gewindebohrers umfasst. Gewindebohrer können somit an der Spannvorrichtung besonders einfach in unterschiedlichen Größen fixiert werden, ohne dass es dabei notwendig ist, Teile der Spannvorrichtung auszuwechseln. Die Spannbacken sind in Radialrichtung bewegbar, sodass dadurch Gewindebohrer in unterschiedlichen Größen, das heißt mit einem unterschiedlichen Durchmesser, kraftschlüssig an Spannflächen der Spannbacken befestigt und fixiert werden können. Das wenigstens eine Elastomerelement zur Abfederung eines axialen Spiels in Axialrichtung des Gewindeschneidfutters und eines tangentialen Spiels in Drehrichtung des Gewindeschneidfutters ist notwendig für ein Gewindeschneidfutter zum Synchron-Gewindeschneiden an einem maschinenseitigen Antrieb, insbesondere einer CNC-Werkzeugmaschine. Der axiale und der tangentiale Anschlag ist notwendig in einem Gewindeschneidfutter mit Elastomerelement, weil die Abfederung des axialen Spiels bzw. das axiale Spiel nicht unbegrenzt sein kann und für eine genaue Begrenzung des axialen Spiels ein axialer Anschlag notwendig ist und dies gilt in analoger Weise für das tangentiale Spiel als ein Spiel für unterschiedliche Drehpositionen des Gewindebohrers.

Der axiale Anschlag begrenzt das axiale Spiel in zwei entgegengesetzt gerichteten ersten und zweiten Axialrichtungen und der tangentiale Anschlag begrenzt das tangentiale Spiel in zwei entgegengesetzt gerichteten ersten und zweiten Tangentialrichtungen und Drehrichtungen. Mittels der Fixierungsvorrichtung kann der Gewindebohrer zusätzlich in Ergänzung zur kraftschlüssigen Fixierung mit den Spannbacken auch mittelbar mit einem Adapter oder unmittelbar formschlüssig zur Übertragung eines Drehmoments in Drehrichtung an der Spannvorrichtung fixiert werden.

In einer ergänzenden Ausgestaltung sind die drei Spannbacken in Axialrichtung mit dem Spannmechanismus beweglich. Mittels des Spannmechanismus sind auf die drei Spannbacken Druck- und/oder Zugkräfte aufbringbar, sodass dadurch die drei Spannbacken in Axialrichtung, das heißt einer Bewegung mit einer Bewegungskomponente in Axialrichtung in beiden Axialrichtungen bewegbar sind.

In einer zusätzlichen Ausgestaltung umfasst der Spannmechanismus einen Spindeltrieb zur Bewegung, insbesondere Translationsbewegung, der drei Spannbacken in Axialrichtung. Vorzugsweise weist der Spindeltrieb ein Betätigungselement auf. Das Betätigungselement kann beispielsweise mittels eines Inbusschlüssels bewegt, insbesondere in eine Rotationsbewegung versetzt werden, sodass dadurch mittels des Spindeltriebes der Spannmechanismus zum Bewegen der Spannbacken betätigt werden kann.

In einer weiteren Ausgestaltung umfasst die Spannvorrichtung, insbesondere der Spannmechanismus, eine Lagerung zur beweglichen Lagerung der Spannbacken in einer Bewegungsrichtung der Spannbacken in einem spitzen Winkel zu der Axialrichtung. Die Lagerung ist dabei dahingehend ausgebildet, dass eine Bewegungsrichtung der Spannbacken in Axialrichtung in Richtung zu einem axialen Ende der Spannvorrichtung eine Verkleinerung des Abstandes der Spannflächen zu einer zentrischen Längsachse der Spannvorrichtung bewirkt und umgekehrt. Zweckmäßig ist der spitze Winkel zwischen 5° und 45°, insbesondere zwischen 10° und 30°.

Zweckmäßig ist die Lagerung als eine Gleitlagerung ausgebildet. Vorzugsweise ist die Lagerung als eine Wälzlagerung ausgebildet. Die Gleitlagerung ist beispielsweise von einer Gegengleitlagerfläche als Innenkonus einer Hülse der Spannvorrichtung, insbesondere des Spannmechanismus, gebildet.

In einer ergänzenden Ausgestaltung verkleinert sich aufgrund der Lagerung die Spannbacken bei einer Bewegung der Spannbacken mit einer Bewegungskomponente in Axialrichtung in einer Richtung zu einem axialen Ende der Spannvorrichtung der radiale Abstand der Spannbacken zu einer zentrischen Längsachse der Spannvorrichtung und umgekehrt.

In einer zusätzlichen Ausgestaltung ist die Geometrie der Fixierungsvorrichtung im Wesentlichen komplementär zu einem im Querschnitt im Wesentlichen quadratischen Fixierungselement mit vier ebenen Fixierungsflächen des Gewindebohrers ausgebildet.

In einer weiteren Ausführungsform weist die Fixierungsvorrichtung vier Gegenfixierungselemente mit vier ebenen Gegenfixierungsflächen als Gegenfixierungsanordnung auf und jeweils zwei der vier Gegenfixierungsflächen sind parallel zueinander ausgerichtet, sodass die Gegenfixierungsflächen der Gegenfixierungselemente auf die Fixierungsflächen des Fixierungselementes, vorzugsweise mit einer Druckkraft, auflegbar sind. Zur formschlüssigen Fixierung des Gewindebohrers liegen somit die vier ebenen Fixierungsflächen des Gewindebohrers auf den vier Gegenfixierungsflächen der Fixierungsvorrichtung auf. Vorzugsweise ist je eine Gegenfixierungsfläche der Fixierungsvorrichtung senkrecht zu je zwei benachbarten Gegenfixierungsflächen ausgerichtet.

In einer weiteren Ausgestaltung weist die Fixierungsvorrichtung mehrere in Axialrichtung nacheinander ausgebildete Gegenfixierungsanordnungen auf für Fixierungselemente der Gewindebohrer in unterschiedlichen Größen.

Vorzugsweise ist der Abstand zwischen je zwei gegenüberliegenden Gegenfixierungsflächen der Gegenfixierungsanordnungen desto größer, desto kleiner der Abstand der Gegenfixierungsanordnungen zu einem axialen Ende der Spannvorrichtung ist.

In einer ergänzenden Ausgestaltung ist der Abstand zwischen je zwei gegenüberliegenden Gegenfixierungsflächen der Gegenfixierungselemente mittels eines Stellmechanismus veränderbar zur Anpassung an Fixierungselemente der Gewindebohrer in unterschiedlichen Größen. Mittels des Stellmechanismus können die Gegenfixierungselemente, insbesondere in radialer Richtung, bewegt werden bzw. sind bewegbar, sodass dadurch der Abstand zwischen zwei gegenüberliegenden Gegenfixierungsflächen veränderbar ist zur Anpassung an die Fixierungselemente der Gewindebohrer in unterschiedlichen Größen. Bei großen Gewindebohrern sind die Abstände von jeweils zwei gegenüberliegenden Fixierungsflächen größer als bei Gewindebohrern mit einer kleineren Größe. In einer zusätzlichen Ausgestaltung umfasst die Spannvorrichtung eine Hülse, insbesondere eine Hülse mit einem Innenkonus als Gegengleitlagerfläche. Vorzugsweise ist der Stellmechanismus manuell, insbesondere mittels eines Inbusschlüssels, und/oder mit einem Aktuator, insbesondere einem Elektro- oder Hydraulikmotor, betätigbar.

In einer weiteren Variante weisen die einer zentrischen Längsachse des Gewindeschneidfutters zugewandten Seiten der Spannbacken je zwei Vorsprünge und je eine Aussparung auf und die je eine Aussparung in Tangentialrichtung zwischen den je zwei Vorsprüngen ausgebildet ist, so dass an jedem der je zwei Vorsprüngen eine Spannfläche ausgebildet ist zum Auflegen und kraftschlüssigen Fixieren einer Außenfläche eines Schaftes des Gewindebohrers.

In einer zusätzlichen Variante ist die Außenfläche des Schaftes des Gewindebohrers mit linien- oder streifenförmigen Kontaktflächen, insbesondere wenigstens sechs linien- oder streifenförmigen Kontaktflächen, zwischen den Spannflächen und der Außenfläche des Schaftes des Gewindebohrers kraftschlüssig fixierbar. Die Spannflächen liegen hierzu mit einer Druckkraft an den Kontaktflächen auf der Außenfläche des Schaftes des Gewindebohrers auf.

Zweckmäßig ist das wenigstens eine Elastomerelement aus einem Elastomer und/oder aus Kunststoff mit einem Elastizitätsmodul des Elastomers und/oder des Kunststoffes zwischen 0,05 GPa und 10 GPa ausgebildet.

In einer weiteren Variante ist das wenigstens eine Elastomerelement als Feder, insbesondere eine Tellerfeder und/oder Spiralfeder, ausgebildet. Vorzugsweise ist die Feder aus Metall, insbesondere Stahl, ausgebildet.

Zweckmäßig ist das wenigstens eine Elastomerelement als ein federnder und/oder elastischer Federring ausgebildet. Vorzugsweise ist der Federring aus Metall, insbesondere Stahl, ausgebildet.

In einer zusätzlichen Variante umfasst das Gewindeschneidfutter mehrere Elastomerelemente.

In einer weiteren Variante weisen die einer zentrischen Längsachse des Gewindeschneidfutters zugewandten Seiten der Spannbacken je einen Vorsprung auf, so dass an jedem Vorsprung je eine Spannfläche ausgebildet ist zum Auflegen und kraftschlüssigen Fixieren einer Außenfläche eines Schaftes des Gewindebohrers und die Anzahl der Kontaktflächen der Anzahl der Spannbacken entspricht.

In einer weiteren Ausgestaltung sind die Spannflächen der Spannbacken in einem Schnitt senkrecht zu der Längsachse des Gewindeschneidfutters konvex gekrümmt ausgebildet und vorzugsweise in einem Schnitt parallel zu der Längsachse des Gewindeschneidfutters eben ausgebildet.

In einer weiteren Ausgestaltung sind die Spannflächen der Spannbacken, insbesondere in einem Schnitt senkrecht zu der Längsachse des Gewindeschneidfutters, eben ausgebildet.

In einer ergänzenden Variante ist der minimale Abstand der Spannflächen zu der zentrischen Längsachse des Gewindeschneidfutters in Axialrichtung konstant.

In einer weiteren Variante beträgt das axiale Spiel, begrenzt von dem axialen Anschlag, zwischen 0,03 mm und 1,8 mm, insbesondere zwischen 0,05 mm und 1 mm.

Zweckmäßig beträgt das tangentiale Spiel begrenzt von dem tangentialen Anschlag zwischen 0,1° und 5°, insbesondere zwischen 0,2° und 3°.

Erfindungsgemäße Spannvorrichtung zur Fixierung eines Werkzeuges, insbesondere eines Gewindebohrers, eines Bohrers oder Fräsers, umfassend drei in Radialrichtung mit einem Spannmechanismus bewegliche Spannbacken zur kraftschlüssigen Fixierung des Gewindebohrers, wobei die Spannvorrichtung gemäß wenigstens eines in dieser Schutzrechtsanmeldung beschriebenen Merkmales, insbesondere wenigstens eines Merkmales bezüglich der Spannvorrichtung, ausgebildet ist. Die Spannvorrichtung kann für die unterschiedlichsten Zwecke, beispielsweise für Bohr-, Dreh- oder Fräsmaschinen zur Fixierung von Werkezeugen zur spanabhebenden Bearbeitung eingesetzte werden. Die Werkzeuge können somit einfach und schnell in unterschiedlichen Größen an der Spannvorrichtung kraftschlüssig und vorzugsweise formschlüssig fixiert werden.

In einer weiteren Ausgestaltung umfasst die Spannvorrichtung einen Adapter zur mittelbaren formschlüssigen Fixierung in Drehrichtung des Fixierungselementes des Gewindebohrers an der Fixierungsvorrichtung der Spannvorrichtung.

Zweckmäßig weist der Adapter erste Adapterfixierungsflächen zur formschlüssigen Fixierung an der Fixierungsvorrichtung und/oder zweite Adapterfixierungsflächen zur formschlüssigen Fixierung an dem Fixierungselement auf.

In einer weiteren Ausgestaltung sind die ersten Adapterfixierungsflächen komplementär zu den vier Gegenfixierungsflächen ausgebildet und/oder die zweiten Adapterfixierungsflächen sind komplementär zu den vier Fixierungsflächen ausgebildet. Eine komplementäre Geometrie bedeutet vorzugsweise, dass die komplementären Geometrien zur formschlüssigen Übertragung eines Drehmomentes geeignet sind.

Zweckmäßig ist die Geometrie der Fixierungsvorrichtung im Wesentlichen komplementär zu den ersten Adapterfixierungsflächen des Adapters ausgebildet und vorzugsweise umgekehrt.

In einer zusätzlichen Ausgestaltung umfasst die Spannvorrichtung wenigstens drei Spannbacken, vorzugsweise drei, vier, fünf oder sechs Spannbacken.

In einer weiteren Ausführungsform sind die Ausdehnungen der Spannflächen der Spannbacken, insbesondere sämtlicher Spannbacken, in Axialrichtung größer, insbesondere um das 2-, 4-, 5-, 7-, 10-, 15- oder 20-Fache größer, als die Ausdehnungen der Spannflächen der Spannbacken in Radialrichtung.

In einer ergänzenden Ausgestaltung umfasst die Spannvorrichtung den Spannmechanismus und/oder einen Spindeltrieb und/oder die Hülse und/oder die wenigstens drei Spannbacken und/oder die Fixierungsvorrichtung.

In einer weiteren Ausführungsform ist die Größe, insbesondere die Ausdehnung der Gegenfixierungsflächen in einer Richtung parallel zu den von den Gegenfixierungsflächen aufgespannten fiktiven Ebenen und senkrecht zu der Axialrichtung, veränderbar mittels eines Zusatzmechanismus. Der Zusatzmechanismus ist manuell und/oder von einem Aktuator, insbesondere einem Elektromotor oder einem Hydraulikmotor, antreibbar. Damit kann die Größe der Gegenfixierungsflächen an die Größe der Gewindebohrer angepasst werden. Beispielsweise sind an den Gegenfixierungselementen und den Gegenfixierungsflächen in einem mittleren Bereich ineinandergreifende Zähne ausgebildet und der Abstand der Zähne zueinander ist veränderbar. Die in der Größe veränderbaren Gegenfixierungselemente sind insbesondere bei einer Spannvorrichtung eingebaut, bei welchen der Abstand zwischen je zwei gegenüberliegenden Gegenfixierungsflächen der Gegenfixierungselemente mittels eines Stellmechanismus veränderbar ist.

In einer ergänzenden Ausgestaltung umfasst das Gewindeschneidfutter ein erstes Auflageelement zum Aufbringen einer Kraft auf das Elastomerelement und das erstes Auflageelement auf dem Elastomerelement aufliegt, ein zweites Auflageelement zum Aufbringen einer Kraft auf das Elastomerelement und das zweite Auflageelement auf dem Elastomerelement aufliegt.

In einer zusätzlichen Variante weist das Elastomerelement in einer ersten Axialrichtung eine größere Federkonstante auf als in einer zweiten Axialrichtung und die erste und zweite Axialrichtung entgegengesetzt zueinander ausgerichtet sind und/oder das Elastomerelement in einer ersten Drehrichtung eine größere Federkonstante aufweist als in einer zweiten Drehrichtung und die erste und zweite Drehrichtung entgegengesetzt zueinander ausgerichtet sind. Die Federkonstante als Proportionalitätsfaktor des Elastomerelementes wird gemäß dem Hookeschen Gesetz bestimmt. Vorzugsweise ist dabei die Federkonstante in der ersten Axialrichtung um wenigstens 10 %, 20 %, 30 %, 50 %, 70 %, 100 %, 150 %, 200 % oder 300 % größer als die Federkonstante in der zweiten Axialrichtung. Vorzugsweise ist die Federkonstante des Elastomerelements in der ersten Drehrichtung um wenigstens 10 %, 30 %, 50 %, 70 %, 100 %, 150 %, 200 % oder 300 % größer als die Federkonstante in der zweiten Drehrichtung.

In einer weiteren Ausführungsform ist das Gewindeschneidfutter, insbesondere das Elastomerelement und das erste und zweite Auflageelement, dahingehend ausgebildet, dass das erste und zweite Auflageelement auf dem Elastomerelement zum Aufbringen einer Druckkraft auf dem Elastomerelement aufliegt zur Abfederung des axialen und/oder tangentialen Spiels. Die Abfederung des axialen und/oder tangentialen Spiels erfolgt somit dadurch, dass von dem ersten und zweiten Auflageelement auf das Elastomerelement eine Druckkraft aufgebracht wird.

In einer ergänzenden Variante ist das Elastomerelement zwischen dem ersten und zweiten Auflageelement in Axialrichtung in einen ersten Axialabschnitt und einen zweiten Axialabschnitt unterteilt.

Zweckmäßig weist der erste Axialabschnitt in Axialrichtung eine kleinere Ausdehnung auf als der zweite Axialabschnitt in Axialrichtung, so dass das Elastomerelement in der ersten Axialrichtung die größere Federkonstante aufweist als in der zweiten Axialrichtung. Aufgrund der unterschiedlichen Ausdehnung des ersten und zweiten Axialabschnitts kann somit auch bei einem konstanten Elastizitätsmoduls des Elastomerelements aufgrund der unterschiedlichen Ausdehnung des ersten und zweiten Axialabschnitts das Elastomerelement in der ersten und zweiten Axialrichtung eine unterschiedliche Federkonstante aufweisen. Je größer die Ausdehnung eines Axialabschnitts ist, desto kleiner ist die Federkonstante dieses Axialabschnitts und umgekehrt bei einem konstanten Elastizitätsmodul des Elastomerelementes.

In einer weiteren Ausgestaltung weist der erste Axialabschnitt in Axialrichtung ein größeres Elastizitätsmodul auf als der zweite Axialabschnitt in Axialrichtung, so dass das Elastomerelement in der ersten Axialrichtung die größere Federkonstante aufweist als in der zweiten Axialrichtung. Je größer das Elastizitätsmodul eines Axialabschnitts ist, desto größer ist die Federkonstante dieses Axialabschnitts.

In einer weiteren Ausgestaltung ist das Elastomerelement zwischen dem ersten und zweiten Auflageelement in Drehrichtung in einen ersten Tangentialabschnitt und einen zweiten Tangentialabschnitt unterteilt.

In einer ergänzenden Ausführungsform weist der erste Tangentialabschnitt in Tangentialrichtung eine kleinere Ausdehnung auf als der zweite Tangentialabschnitt in Tangentialrichtung, so dass das Elastomerelement in der ersten Tangentialrichtung die größere Federkonstante aufweist als in der zweiten Tangentialrichtung. Je größer die Ausdehnung eines Tangentialabschnitts ist, desto kleiner ist die Federkonstante dieses Tangentialabschnitts und umgekehrt bei einem konstanten Elastizitätsmodul des Elastomerelementes.

In einer zusätzlichen Variante weist der erste Tangentialabschnitt in Tangentialrichtung ein größeres Elastizitätsmodul auf als der zweite Tangentialabschnitt in Tangentialrichtung, so dass das Elastomerelement in der ersten Tangentialrichtung die größere Federkonstante aufweist als in der zweiten Tangentialrichtung.

In einer zusätzlichen Ausgestaltung ist das erste Auflageelement als ein Stift ausgebildet und das zweite Auflageelement als eine Begrenzung einer Aussparung ausgebildet oder umgekehrt.

In einer zusätzlichen Variante weist das Elastomerelement eine Bohrung auf und der Stift ist in der Bohrung angeordnet, so dass der Stift auf einer Teilaußenseite des Elastomerelementes, welches die Bohrung begrenzt, aufliegt und eine andere Teilaußenseite des Elastomerelementes liegt auf dem zweiten Auflageelement als der Begrenzung der Aussparung auf.

In einer ergänzenden Ausführungsform ist der Stift an dem Aufnahmeschaft befestigt und die Aussparung ist an dem Zwischenteil, insbesondere einem hülsenförmigen Abschnitt des Zwischenteiles, ausgebildet.

In einer zusätzlichen Ausgestaltung ist der Stift und/oder die Aussparung im Wesentlichen in radialer Richtung ausgerichtet. Im Wesentlichen radiale Richtung bedeutet vorzugsweise, dass der Stift und/oder die Aussparung mit einer Abweichung von weniger als 30°, 20°, 10° oder 5° zu einer Radialrichtung ausgerichtet sind.

In einer ergänzenden Variante sind das erste Axialanschlagelement und/oder das erste Tangentialanschlagelement als ein Bolzen ausgebildet und das zweite Axialanschlagelement und/oder das zweite Tangentialanschlagelement als eine radiale Begrenzung und/oder axiale Begrenzung einer Ausnehmung ausgebildet und der Bolzen ist innerhalb der Ausnehmung angeordnet.

In einer zusätzlichen Ausgestaltung ist der Bolzen an dem Zwischenteil befestigt und die Aussparung ist an dem Aufnahmeschaft ausgebildet oder umgekehrt.

In einer zusätzlichen Variante ist das erste Axialanschlagelement mit einem Spiel in der ersten und zweiten Axialrichtung bezüglich des zweiten Axialanschlagelements angeordnet.

In einer zusätzlichen Variante ist das erste Tangentialanschlagelement mit einem Spiel in der ersten und zweiten Tangentialrichtung bezüglich des zweiten Tangentialanschlagelements angeordnet.

In einer ergänzenden Ausgestaltung liegt das erste und/oder zweite Auflageelement mit einer Druckkraft auf dem Elastomerelement auf.

Vorzugsweise liegt das erste und/oder zweite Auflageelement mittelbar oder unmittelbar auf dem Elastomerelement auf.

In einer weiteren Ausführungsform ist das Elastomerelement in der Axialrichtung von dem ersten oder zweiten Auflageelement und/oder einer Bohrung in dem Elastomerelement in den ersten und zweiten Axialabschnitt unterteilt.

In einer weiteren Ausführungsform ist das Elastomerelement in der Drehrichtung von dem ersten oder zweiten Auflageelement und/oder einer Bohrung in dem Elastomerelement in den ersten und zweiten Tangentialabschnitt unterteilt.

Zweckmäßig ist das Elastomerelement aus einem Elastomer, insbesondere Gummi und/oder NBR und/oder SBR (Styrol-Butadien-Kautschuk) und/oder EPDM und/oder FKM und/oder Silikon, ausgebildet.

In einer weiteren Ausgestaltung liegt das Elastizitätsmodul in GPa des Elastomerelementes zwischen 0,05 und 10, insbesondere zwischen 0,5 und 5.

In einer weiteren Ausgestaltung ist das Elastomerelement aus Kunststoff, insbesondere CFK und/oder GFK, vorzugsweise faserverstärkter CFK und/oder faserverstärkter GFK, ausgebildet.

In einer zusätzlichen Variante ist das Elastomerelement aus Textilien und/oder Leder und/oder Metall, insbesondere Stahl und/oder Messing und/oder Aluminium, ausgebildet.

In einer ergänzenden Ausführungsform ist das Elastomerelement aus Papier oder Papier, insbesondere Papier oder Pappe mit Wabenstruktur, ausgebildet.

In einer zusätzlichen Variante ist bzw. sind in dem Elastomerelement wenigstens ein Hohlraum, vorzugsweise mehrere Hohlräume, insbesondere als wenigstens eine Durchgangsöffnung, ausgebildet. Der wenigstens eine Hohlraum verkleinert die Federkonstante des Elastomerelementes, so dass das Elastomerelement bei einer großen Anzahl an Hohlräumen ungefähr nach dem Prinzip einer Blattfeder mit mehreren Federblättern fungiert.

In einer weiteren Ausgestaltung ist der wenigstens eine Hohlraum des Elastomerelementes im Querschnitt im Wesentlichen sichelförmig und/oder halbkreisförmig und/oder ellipsenförmig und/oder kreisförmig ausgebildet.

Zweckmäßig ist in dem wenigstens einen Hohlraum kein Auflageelement angeordnet. Bei einem Aufbringen einer Kraft, insbesondere Druckkraft, auf das Elastomerelement kann sich somit das Elastomerelement verformen und das Volumen des wenigstens einen Hohlraumes verkleinert sich.

In einer weiteren Variante sind der Aufnahmeschaft und/oder das Zwischenteil und/oder die Spannvorrichtung aus Metall, insbesondere Stahl, ausgebildet.

Im Nachfolgenden werden Ausführungsbeispiele der Erfindung unter Bezugnahme auf die beigefügten Zeichnungen näher beschrieben.

Es zeigt:
- Fig. 1: einen Längsschnitt eines Aufnahmeschaftes eines Gewindeschneidfutters,
- Fig.2: einen Längsschnitt eines Zwischenteils des Gewindeschneidfutters,
- Fig.3: eine Seitenansicht des Zwischenteils gemäß Fig. 2 des Gewindeschneidfutters,
- Fig. 4: einen Längsschnitt des Gewindeschneidfutters,
- Fig. 5: einen Querschnitt A-A gemäß Fig. 1 des Aufnahmeschaftes,
- Fig. 6: eine vergrößerten Teillängsschnitt des Gewindespannfutters gemäß Fig. 4,
- Fig. 7a: eine Draufsicht eines Elastomerelementes in einem ersten Ausführungsbeispiel bei einer ersten Anordnung,
- Fig. 7b: eine Draufsicht des Elastomerelementes in dem ersten Ausführungsbeispiel bei einer zweiten Anordnung
- Fig. 7c: eine perspektivische Ansicht des Elastomerelementes in dem ersten Ausführungsbeispiel,
- Fig. 8a: eine Draufsicht des Elastomerelementes in einem zweiten Ausführungsbeispiel bei einer ersten Anordnung,
- Fig. 8b: eine Draufsicht des Elastomerelementes in dem zweiten Ausführungsbeispiel bei einer zweiten Anordnung,
- Fig. 8c: eine Draufsicht des Elastomerelementes in dem zweiten Ausführungsbeispiel bei einer dritten Anordnung,
- Fig. 8d: eine Draufsicht des Elastomerelementes in dem zweiten Ausführungsbeispiel bei einer vierten Anordnung,
- Fig. 9a: eine Draufsicht des Elastomerelementes in einem dritten Ausführungsbeispiel bei einer ersten Anordnung,
- Fig. 9b: eine Draufsicht des Elastomerelementes in dem dritten Ausführungsbeispiel bei einer zweiten Anordnung,
- Fig. 9c: eine Draufsicht des Elastomerelementes in dem dritten Ausführungsbeispiel bei einer dritten Anordnung,
- Fig. 9d: eine Draufsicht des Elastomerelementes in dem dritten Ausführungsbeispiel bei einer vierten Anordnung,
- Fig. 10a: eine Draufsicht des Elastomerelementes in einem vierten Ausführungsbeispiel bei einer ersten Anordnung,
- Fig. 10b: eine Draufsicht des Elastomerelementes in dem vierten Ausführungsbeispiel bei einer zweiten Anordnung,

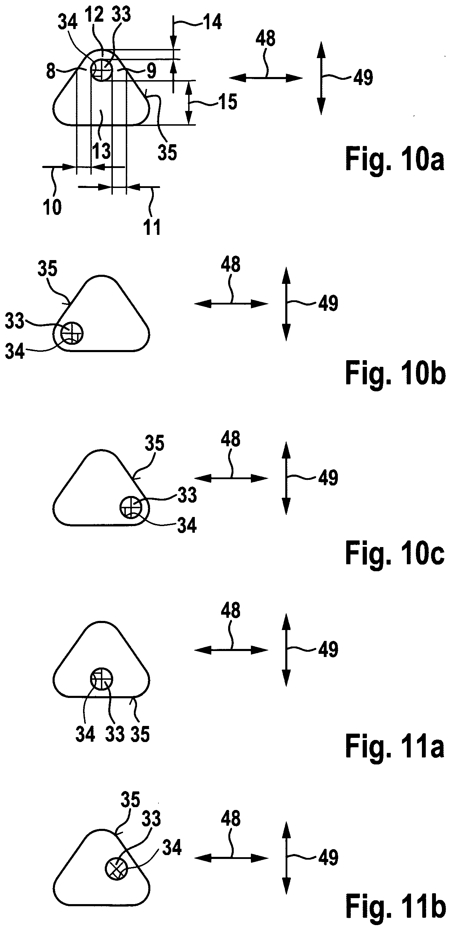

- Fig. 10a: eine Draufsicht des Elastomerelementes in dem vierten Ausführungsbeispiel bei einer dritten Anordnung,
- Fig. 11a: eine Draufsicht des Elastomerelementes in einem fünften Ausführungsbeispiel bei einer ersten Anordnung,
- Fig. 11b: eine Draufsicht des Elastomerelementes in dem fünften Ausführungsbeispiel bei einer zweiten Anordnung,

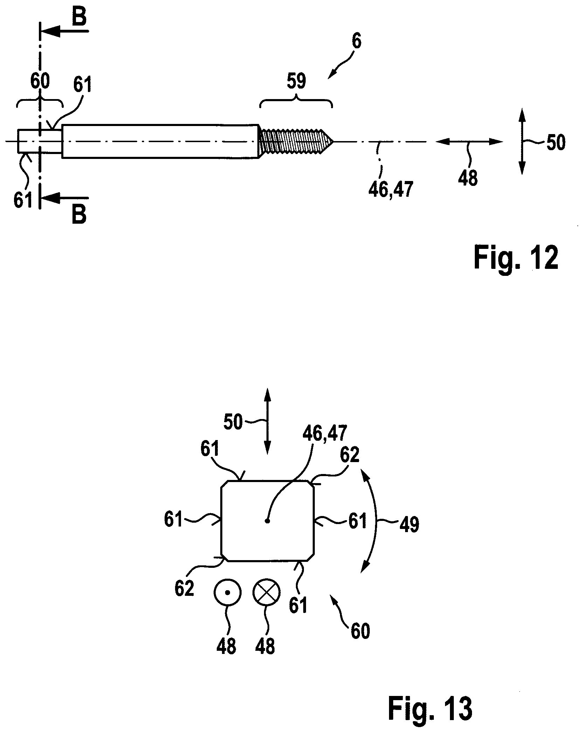

- Fig. 12: eine Seitenansicht eines Gewindebohrers,
- Fig. 13: einen Querschnitt B-B des Gewindebohrers gemäß Fig. 12,

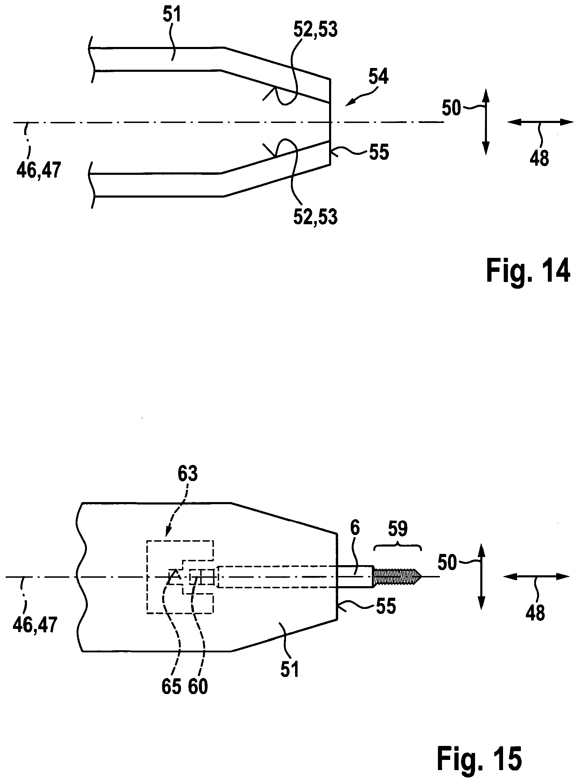

- Fig. 14: einen Längsschnitt einer Hülse einer Spannvorrichtung des Gewindeschneidfutters,
- Fig. 15: eine Seitenansicht der Spannvorrichtung,

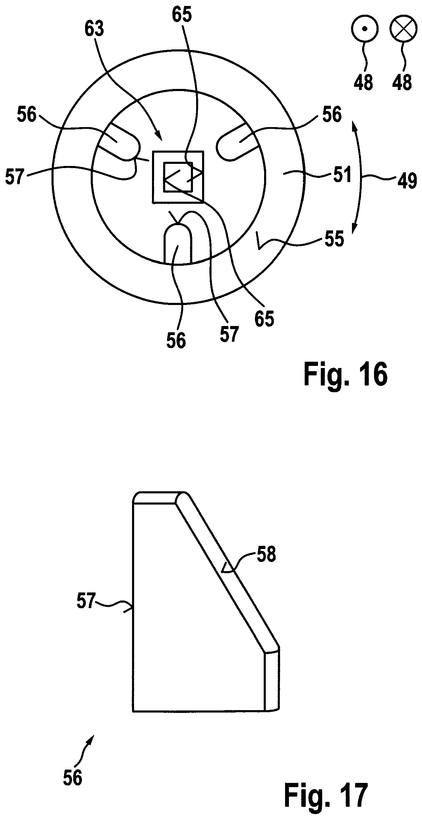

- Fig. 16: eine Vorderansicht der Spannvorrichtung mit Spannbacken in einem ersten Ausführungsbeispiel,
- Fig. 17: eine Ansicht einer Spannbacke der Spannvorrichtung,

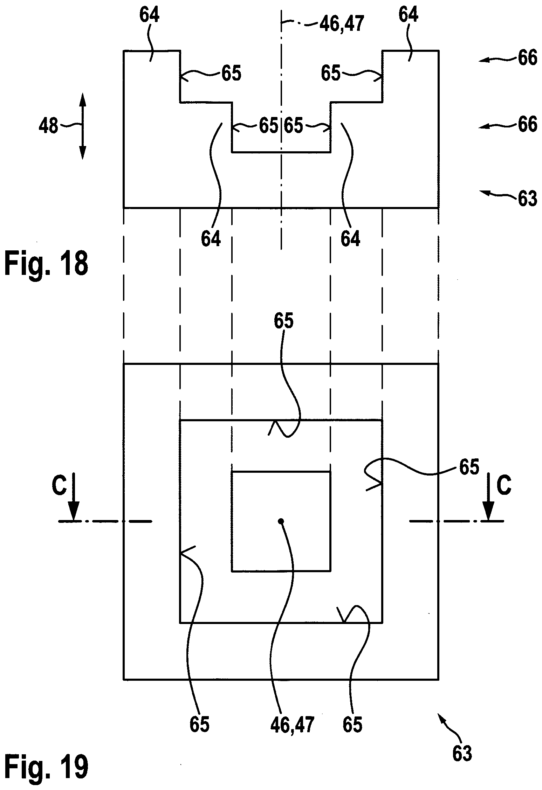

- Fig. 18: einen Querschnitt C-C gemäß Fig. 19 einer Fixierungsvorrichtung in einem ersten Ausführungsbeispiel der Spannvorrichtung,
- Fig. 19: eine Draufsicht der Fixierungsvorrichtung gemäß Fig. 18,

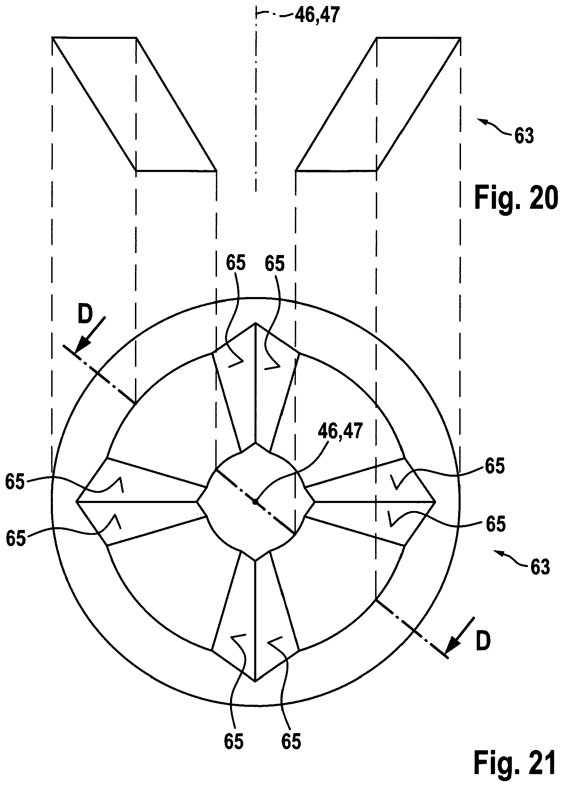

- Fig. 20: einen Querschnitt D-D gemäß Fig. 21 der Fixierungsvorrichtung in einem zweiten Ausführungsbeispiel der Spannvorrichtung,
- Fig. 21: eine Draufsicht der Fixierungsvorrichtung gemäß Fig. 20,

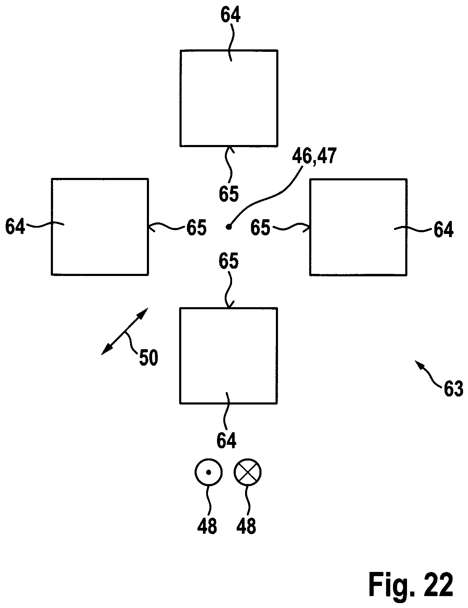

- Fig. 22: eine Draufsicht der Fixierungsvorrichtung in einem dritten Ausführungsbeispiel,

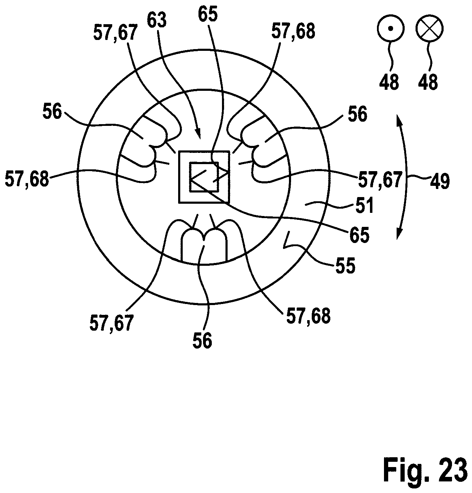

- Fig. 23: eine Vorderansicht der Spannvorrichtung mit Spannbacken in einem zweiten Ausführungsbeispiel,

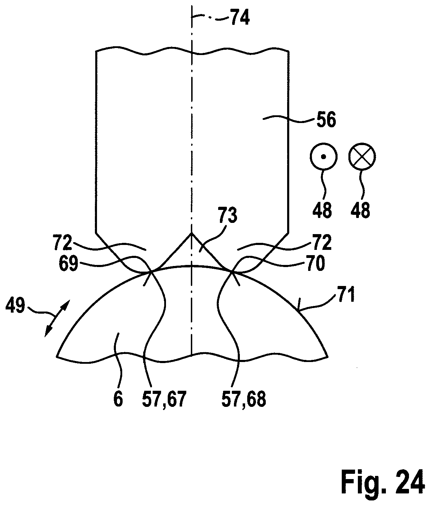

- Fig. 24: einen Teilquerschnitt durch einen Spannbacken und einen Schaft des Gewindebohrers in einem zweiten Ausführungsbeispiel des Spannbackens und

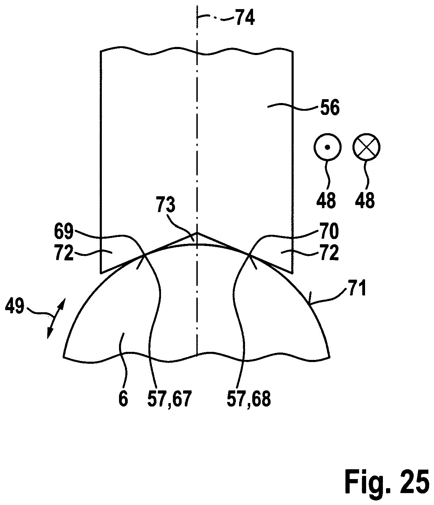

- Fig. 25: einen Teilquerschnitt durch einen Spannbacken und den Schaft des Gewindebohrers in einem dritten Ausführungsbeispiel des Spannbackens.

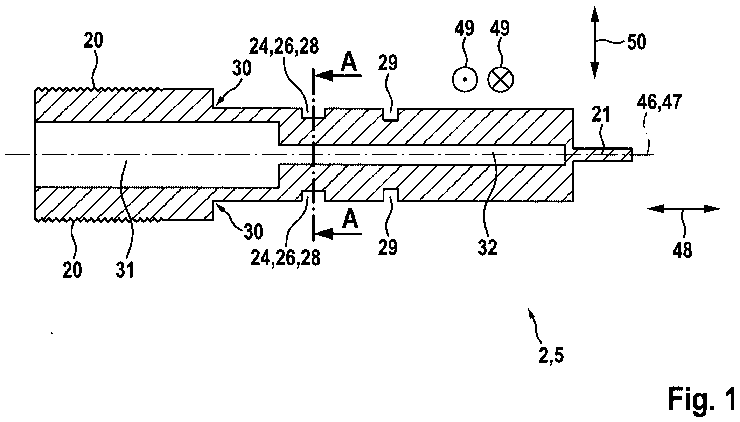

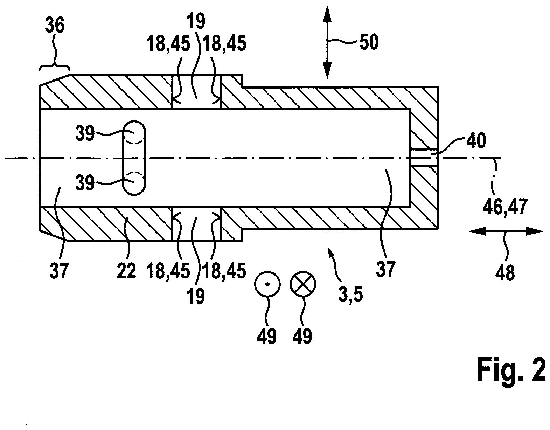

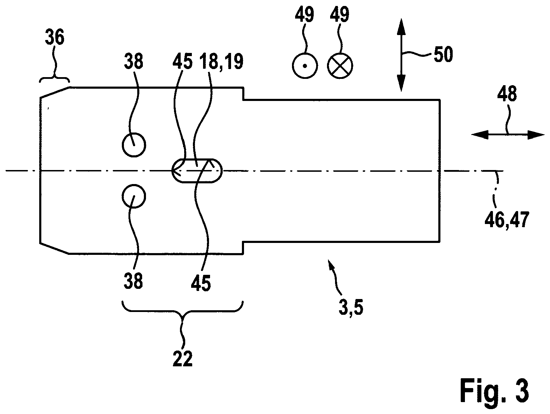

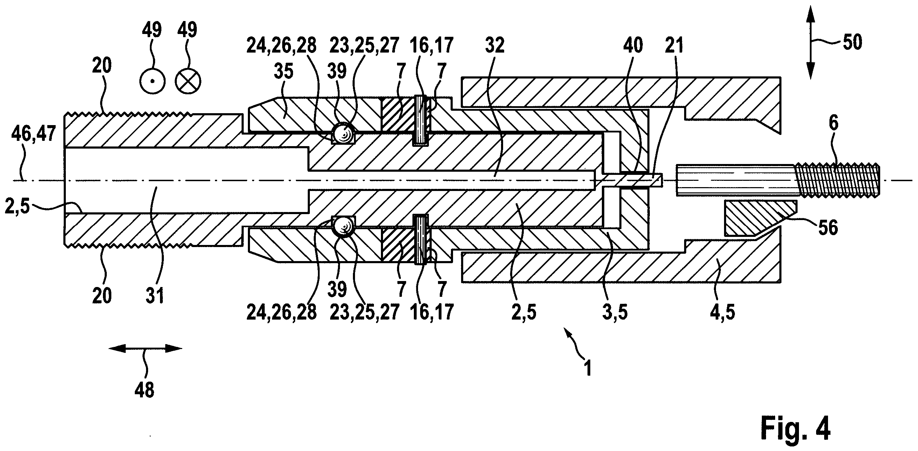

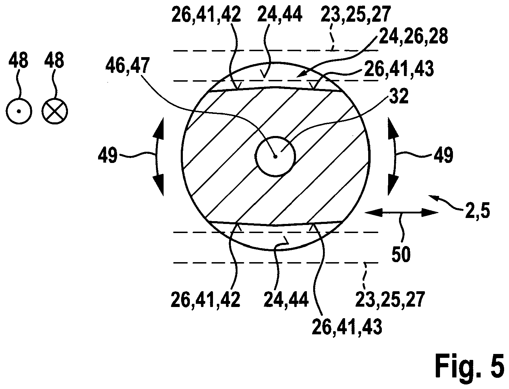

Ein Gewindeschneidfutter 1 ist mit einem Aufnahmeschaft 2 an einem maschinenseitigen Antrieb (nicht dargestellt), insbesondere einer CNC-Werkzeugmaschine, befestigt. An einer Spannvorrichtung 4 ist kraftschlüssig und vorzugsweise formschlüssig ein Gewindebohrer 6 befestigt zum Einarbeiten eines Gewindes in ein nicht dargestelltes Werkstück. Der Aufnahmeschaft 2 ist mit dem Spannvorrichtung 4 mittels eines Zwischenteils 3 mechanisch gekoppelt und verbunden. Der Aufnahmeschaft 2, das Spannvorrichtung 4 und der Gewindebohrer 6 bilden jeweils Komponenten 5 des Gewindeschneidfutters 1. Der Aufnahmeschaft 2 weist eine erste zentrische Bohrung 31 mit einem größeren Durchmesser auf als eine zweite zentrische Bohrung 32. Ein Außengewinde 20 an dem Aufnahmeschaft 2 dient zur mechanischen Kopplung mit dem maschinenseitigen Antrieb. Ferner ist an der Außenseite des Aufnahmeschafts 2 eine Stufe 30 ausgebildet, welche als Anschlag für das Zwischenteil 3 fungiert. Der Aufnahmeschaft 2 weist wie das Gewindeschneidfutter 1 eine zentrische Längsachse 46 auf, welche zugleich eine Rotationsachse 47 des Gewindeschneidfutters 1 bildet. Eine Axialrichtung 48 ist somit parallel zu der zentrischen Längsachse 46 und der Rotationsachse 47 des Gewindeschneidfutters 1 ausgerichtet. Eine Radialrichtung 50 ist senkrecht zu der zentrischen Längsachse 46 und damit auch der Rotationsachse 47 ausgerichtet. Eine Tangentialrichtung 49 als einer Drehrichtung 49 ist senkrecht zu der Zeichenebene von Fig. 1, 2, 3 und 4 ausgerichtet. An dem Aufnahmeschaft 2 sind zwei Befestigungsbohrungen 29 als Sacklochbohrungen in der Radialrichtung 50 eingearbeitet. Ferner sind außenseitig an dem Aufnahmeschaft 2 zwei Ausnehmungen 28 eingearbeitet. Eine axiale Begrenzung 44 der Ausnehmung 28 bilden ein zweites Axialanschlagelement 24 und eine radiale Begrenzung 41 der Ausnehmung 28 bildet ein zweites Tangentialanschlagelement 26. An einem zu dem Außengewinde 20 zugewandt zu dem maschinenseitigen Antrieb gegenüberliegenden Ende des Aufnahmeschafts 2 ist ein Zentrierstift 21 ausgebildet (Fig. 1). Die Ausnehmung 28 des Aufnahmeschafts 2 weist in der Radialrichtung 50 die radiale Begrenzung 41 auf. Die radiale Begrenzung 41 ist dabei in einen ersten ebenen Abschnitt 42 und in einen zweiten ebenen Abschnitt 43 unterteilt (Fig. 5). In Axialrichtung 48 ist die Ausnehmung 28 von jeweils zwei axialen Begrenzungen 44 begrenzt.

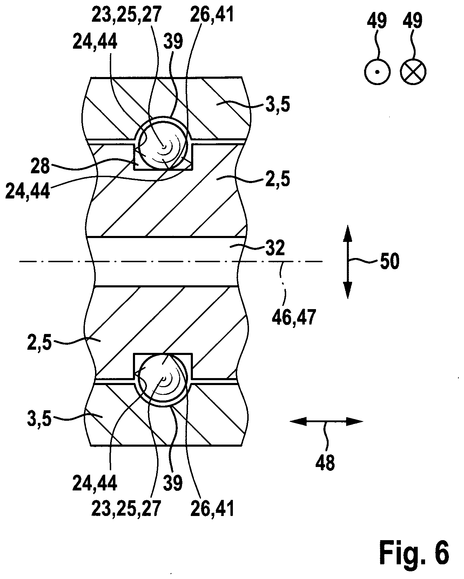

Das Zwischenteil 3 weist eine zentrische Bohrung 37 mit einem konstanten Durchmesser auf. An der Außenseite des Zwischenteils 3 zugewandt zu dem Außengewinde 20 ist ein konisch sich verjüngender Abschnitt 36 ausgebildet. An dem Zwischenteil 3 sind zwei durchgehende Aussparungen 19 ausgebildet, welche in der Radialrichtung 50 fluchten. Die Aussparungen 19 sind von einer Begrenzung 45 des Zwischenteils 3 begrenzt und die Begrenzungen 45 der Aussparungen 19 bilden zweite Auflageelemente 18. Ferner sind an einem hülsenförmigen Abschnitt 22 des Zwischenteils 3 insgesamt vier Befestigungsbohrungen 38 ausgebildet. Jeweils zwei Befestigungsbohrungen 38 fluchten zueinander in der Radialrichtung 50 und in den jeweils zwei fluchtenden Bohrungen 38 ist ein Bolzen 27 angeordnet und befestigt. An einem zu dem Gewindebohrer 6 zugewandten Ende des Zwischenteils 3 ist eine zentrische Zentrierbohrung 40 für den Zentrierstift 21 ausgebildet. Ein Teilbereich 39 der Befestigungsbohrung 38 ragt in die zentrische Bohrung 37 des Zwischenteils 3 hinein, sodass dadurch an einem Bereich der Bolzen 27 einerseits teilweise in dem Teilbereich 39 der Befestigungsbohrung 38 angeordnet ist und zusätzlich teilweise in der Ausnehmung 28 (Fig. 6).

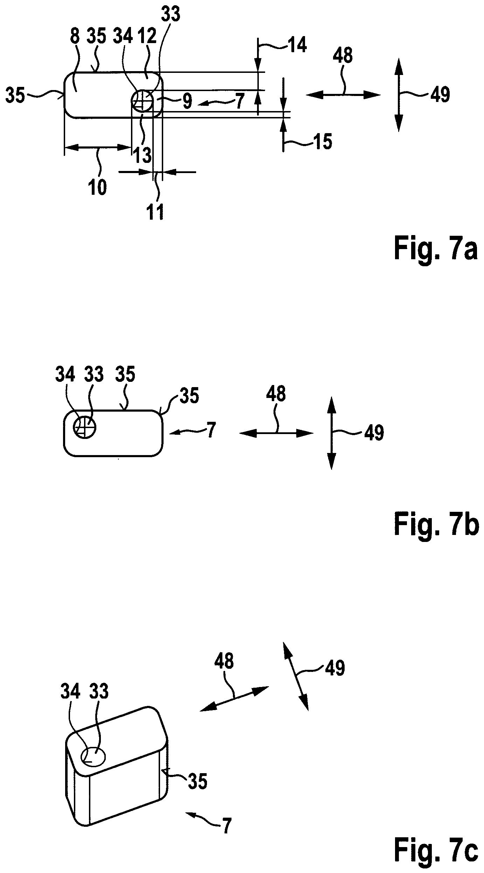

Ein Elastomerelement 7 (Fig. 7a, 7b, 7c) aus Gummi als einem Elastomer, weist eine Bohrung 33 auf, die im Wesentlichen in der Radialrichtung 50, das heißt mit einer Abweichung von weniger als 30°, 20°, 10° oder 5°, zu der Radialrichtung 50 des Gewindeschneidfutters 1 ausgerichtet ist analog zu den Befestigungsbohrungen 29 in dem Aufnahmeschaft 2. Die Bohrungen 33 des Elastomerelements 7 sind von einer Teilaußenseite 34 des Elastomerelements 7 begrenzt. In den zwei Befestigungsbohrungen 29 des Aufnahmeschafts 2 ist jeweils ein Stift 17 aus Metall, insbesondere Stahl, als ein erstes Auflageelement 16 im Wesentlichen ausgerichtet in der Radialrichtung 50 befestigt. Ein Teilbereich des Stifts 17 ragt aus der Befestigungsbohrung 29 heraus und ist in der Bohrung 33 des Elastomerelements 7 angeordnet. Das Gewindeschneidfutter 1 weist zwei Elastomerelemente 7 auf, die jeweils in der Aussparung 19 des Zwischenteil 3 angeordnet sind bei einer Anordnung des Stifts 17 in der Bohrung 33 des Elastomerelements 7. Damit liegt eine Teilaußenseite 35 des Elastomerelements 7 auf der Begrenzung 45 der Aussparung 19 des Zwischenteils 3 auf. Vorzugsweise ist dabei die Ausdehnung des Elastomerelements 7 dahingehend ausgebildet, dass auch ohne Beanspruchung des Gewindeschneidfutters 1 die Teilaußenseite 35 elastisch vorgespannt auf der Begrenzung 45 aufliegt und die Teilaußenseite 34 an der Bohrung 33 elastisch vorgespannt auf dem Stift 17 aufliegt, das heißt, dass stets ein Kontakt zwischen der Teilaußenseite 34 der Bohrung 33 und dem Stift 17 vorhanden ist und der Teilaußenseite 35 des Elastomerelements 7 und der Begrenzung 45 vorhanden ist.

In zwei fluchtenden Befestigungsbohrungen 38 des Zwischenteils 3 ist je ein Bolzen 27 befestigt, welcher ein erstes Tangentialanschlagelement 25 und ein erstes Axialanschlagelement 23 bildet. Je einer der beiden Bolzen 27 ist teilweise in der Ausnehmung 28 angeordnet. In Fig. 5 sind die Bolzen 27 strichliert dargestellt. Ohne eine Beanspruchung des Gewindeschneidfutters 1 mit Kräften weist dabei der Bolzen 27 zu beiden axialen Begrenzungen 44 der Ausnehmung 28 ein Spiel auf und außerdem zu der radialen Begrenzung 41 der Ausnehmung 28. Der Bolzen 27 und die radiale Begrenzung 41 sowie die axiale Begrenzung 44 bilden somit einen axialen Anschlag und einen tangentialen Anschlag zur Begrenzung des abgefederten axialen und tangentialen Spiels an dem Spannvorrichtung 4 und damit auch an dem Gewindebohrer 6. Kommt die Außenseite des Bolzens 27 aus Stahl auf einer der beiden axialen Begrenzungen 44 zum Aufliegen in einer ersten oder zweiten Axialrichtung, ist damit das abgefederte axiale Spiel der Spannvorrichtung 4 begrenzt. In analoger Weise ist das abgefederte tangentiale Spiel der Spannvorrichtung 4 in der Drehrichtung begrenzt, sobald der Bolzen 27 auf der radialen Begrenzung 41, das heißt entweder auf dem ersten ebenen Abschnitt 42 oder dem zweiten ebenen Abschnitt 43 zur Auflage kommt zur Begrenzung des abgefederten axialen Spiels in der ersten oder zweiten Drehrichtung. Aufgrund der ebenen Ausbildung des ersten und zweiten ebenen Abschnitts 42, 43 der radialen Begrenzung 41 liegt der zylinderförmige Bolzen 27 großflächig auf der radialen Begrenzung 41 auf, sodass dadurch keine Spannungsspitzen zwischen dem Bolzen 27 und der radialen Begrenzung 41 des Zwischenteils 3 auftreten können.

Das Elastomerelement 7 ist aus Gummi mit einem konstanten Elastizitätsmodul ausgebildet. In einer ersten Axialrichtung (links von der Bohrung 33 gemäß Fig. 7a) weist das Elastomerelement 7 in dem ersten Ausführungsbeispiel gemäß Fig. 7a einen ersten Axialabschnitt 8 mit einer Ausdehnung 10 auf und in einer zweiten Axialrichtung (rechts von der Bohrung 33 gemäß Fig. 7a) einen zweiten Axialabschnitt 9 mit einer Ausdehnung 11 auf. In der Tangentialrichtung 49 weist das Elastomerelement 7 (Fig. 7a) einen ersten Tangentialabschnitt 12 (über der Bohrung 33 gemäß Fig. 7a) in einer ersten Drehrichtung und einen zweiten Tangentialabschnitt 13 (unter der Bohrung 33 gemäß Fig. 7a) in einer zweiten Drehrichtung auf. Der erste Tangentialabschnitt 12 weist eine Ausdehnung 14 auf und der zweite Tangentialabschnitt 13 weist eine Ausdehnung 15 auf. Die Ausdehnung 10 des ersten Axialabschnitts 8 ist wesentlich größer als die Ausdehnung 11 des zweiten Axialabschnitts 9. Der erste Axialabschnitt 8 dient zur elastischen Abfederung des axialen Spiels in der ersten Axialrichtung und der zweite Axialabschnitt des Elastomerelements 7 dient zur Abfederung des axialen Spiels in der zweiten Axialrichtung. In analoger Weise dient der erste Tangentialabschnitt 12 zur elastischen Abfederung des tangentialen Spiels in einer ersten Drehrichtung und der zweite Tangentialabschnitt 13 zur elastischen Abfederung in einer zweiten Drehrichtung des Gewindeschneidfutters 1. Der erste Tangentialabschnitt 12 ist wesentlich größer in der Ausdehnung 14 als die Ausdehnung 15 des zweiten Tangentialabschnitts 13, sodass dadurch der erste Tangentialabschnitt 12 eine kleinere Federkonstante aufweist als der zweite Tangentialabschnitt 13. Entsprechend weist der erste Axialabschnitt 8 eine kleinere Federkonstante auf als der zweite Axialabschnitt 9. Dabei können die erste und zweite Axialrichtung und die erste und die zweite Drehrichtung beliebig an dem Gewindeschneidfutter 1 definiert werden. Das Elastomerelement 7 in dem ersten Ausführungsbeispiel ist an der Teilaußenseite 35 im Wesentlichen gerade und teilkreisförmig ausgebildet zur Einfügung in die entsprechend komplementär ausgebildete Begrenzung 45.

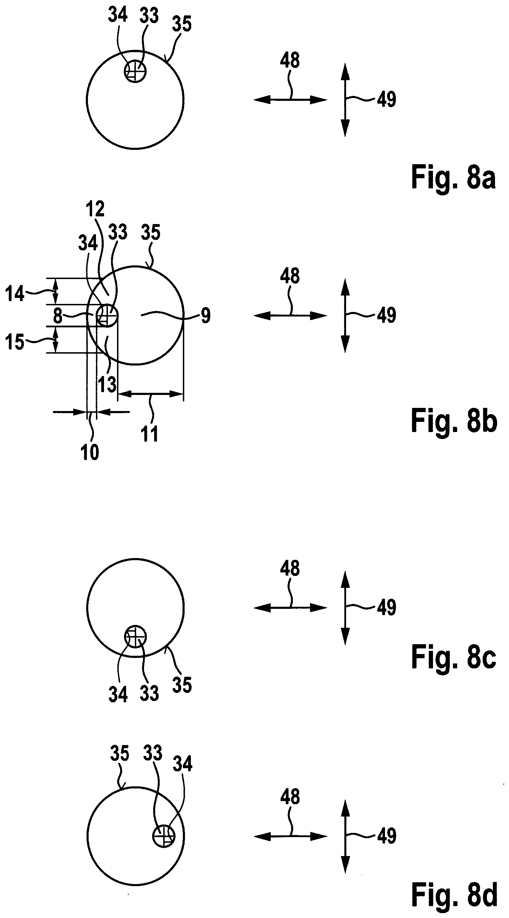

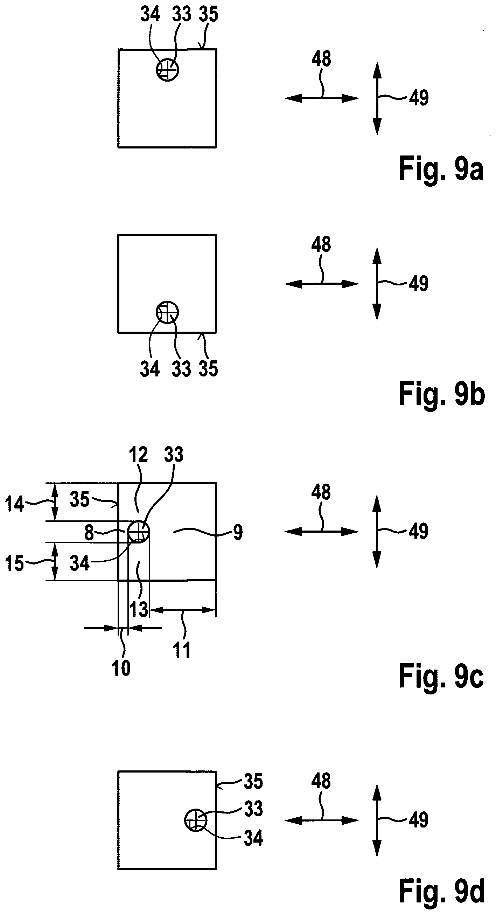

In Fig. 8a bis 8d ist ein zweites Ausführungsbeispiel des Elastomerelementes 7 dargestellt. Die Teilaußenseite 35 des Elastomerelements 7 ist dabei zylindermantelförmig ausgebildet, sodass dadurch das Elastomerelement 7 in einer zylindermantelförmigen Begrenzung 45 (nicht dargestellt) der Aussparung 19 des Zwischenteils 3 in unterschiedlichen Drehpositionen angeordnet werden kann, sodass dadurch mit einem identischen Elastomerelement 7 unterschiedliche Ausdehnungen 10, 11 des ersten und zweiten Axialabschnitts 8, 9 und unterschiedliche Ausdehnungen 14, 15 des ersten und zweiten Tangentialabschnitts 12, 13 erreicht werden können gemäß den Fig. 8a bis 8d. Dies gilt analog für ein drittes Ausführungsbeispiel (Fig. 9a, 9b, 9c, 9d) des Elastomerelementes 7, das an der Teilaußenseite 35 quadratisch ausgebildet ist.

In Fig. 10a bis 10c ist ein viertes Ausführungsbeispiel des Elastomerelements 7 dargestellt. Die Teilaußenseite 35 des Elastomerelements 7 ist dabei im Wesentlichen dreieckförmig ausgebildet und durch eine unterschiedliche Anordnung des identischen Elastomerelements 7 in einer entsprechend komplementär dreieckförmig ausgebildeten Begrenzung 45 der Aussparung 9 können dadurch wieder unterschiedliche Ausdehnungen 10, 11, 14, 15 gemäß den oben beschriebenen Ausführungsbeispielen erreicht werden und dies gilt analog für das fünfte Ausführungsbeispiel des Elastomerelements 7, welches in den Fig. 11a und 11b abgebildet ist.

An dem Gewindeschneidfutter 1 ist ein Gewindebohrer 6 befestigt. Mittels des Gewindebohrers 6 wird in ein Werkstück ein Gewinde eingearbeitet. Während des Einarbeitens des Gewindes wird das Gewindeschneidfutter 1 von einem maschinenseitigen Antrieb, insbesondere einer CNC-Werkzeugmaschine, in der Axialrichtung 48 mit einer bestimmten Vorschubgeschwindigkeit bewegt und in der tangentialen Richtung 49 mit einer bestimmten Winkelgeschwindigkeit als einer bestimmten Rotationsgeschwindigkeit simultan bewegt entsprechend der Steigung des Gewindebohrers 6. Aufgrund von Fertigungsungenauigkeiten an der Steigung des Gewindebohrers 6 und des nicht mit absoluter Genauigkeit führbaren Gewindeschneidfutters 1 in der Axialrichtung 48 mit der Vorschubgeschwindigkeit und der Winkelgeschwindigkeit bzw. Rotationsgeschwindigkeit in der Tangentialrichtung 49 bzw. Drehrichtung 49 kommt es zu Abweichungen zwischen der Steigung des Gewindebohrers 6 und der notwendigen Vorschub- und Rotationsgeschwindigkeit des Gewindebohrers 6. Aus diesem Grund ist es insbesondere zur Vermeidung von hohen auftretenden Kräften an dem Gewindeschneidfutter 1 notwendig, in der Axial- und Tangentialrichtung 48, 49 ein axiales und tangentiales Spiel vorzusehen, welches mit dem Elastomerelement 7 elastisch abgefedert ist. Für eine Optimierung des Einarbeitens eines Gewindes mittels des Gewindebohrers 6 ist es dabei notwendig, in der ersten und zweiten Axialrichtung eine unterschiedliche optimierte Federkonstante speziell für das axiale Spiel in der ersten Axialrichtung und der zweiten Axialrichtung vorzusehen. Dies gilt analog für das tangentiale Spiel speziell in der ersten Drehrichtung und der zweiten Drehrichtung. Aufgrund der konstruktiven Ausbildung des Elastomerelements 7 an der Begrenzung 45 und dem Stift 17 mit unterschiedlichen Ausdehnungen 10, 11 in dem ersten und zweiten Axialabschnitt 8, 9 und unterschiedlichen Ausdehnungen 14, 15 in dem ersten und zweiten Tangentialabschnitt 12, 13 können in einfacher Weise unterschiedliche Federkonstanten in der ersten und zweiten Axialrichtung und in der ersten und zweiten Drehrichtung erreicht werden. Durch eine entsprechende Ausbildung der Geometrie der Begrenzung 45 und der Teilaußenseite 35 des Elastomerelementes 7 können unterschiedliche Federkonstanten in der ersten und zweiten Axialrichtung und in der ersten und zweiten Drehrichtung lediglich durch eine unterschiedliche Drehposition des Elastomerelements 7 in der Begrenzung 45 der Aussparung 19 in vorteilhafter Weise erreicht werden. Das Gewindeschneidfutter 1 ist damit in der Herstellung preiswert, im Betrieb zuverlässig und kann durch die konstruktive Ausbildung einfach unterschiedliche Federkonstanten in den Axial- und Drehrichtungen aufweisen für eine Optimierung des Einschneidens eines Gewindes mit dem Gewindebohrer 6.

Der Gewindebohrer 6 umfasst ein Fixierungselement 60 (Fig. 12 und 13) an einem hinteren Endbereich und eine Schneidgeometrie an einem vorderen Endbereich des Gewindebohrers 6. Bei einer Fixierung des Gewindebohrers 6 an der Spannvorrichtung 4 des Gewindeschneidfutters 1 entspricht die zentrische Längsachse 46 des Gewindeschneidfutters 1 der zentrischen Längsachse 46 des Gewindebohrers 6 und zugleich entspricht die Rotationsachse 47 des Gewindeschneidfutters 1 der Rotationsachse 47 des Gewindebohrers 6. Das Fixierungselement 60 ist im Querschnitt im Wesentlichen quadratisch ausgebildet (Fig. 13), sodass sich dadurch vier ebene im Wesentlichen rechteckförmig oder quadratische Fixierungsflächen 61 an dem Fixierungselement 60 ausbilden. Zwischen den Fixierungsflächen 61 sind dabei Fasen 62 vorhanden, um scharfe Kanten zu vermeiden. In den Fig. 14 bis 19 ist ein erstes Ausführungsbeispiel der Spannvorrichtung 4 dargestellt. Die Spannvorrichtung 4 umfasst eine Hülse 51 und an einem Endbereich der Hülse 51 im Bereich eines axialen Endes 55 der Spannvorrichtung 4 ist eine Innenkonus 52 ausgebildet, welcher eine Gegengleitlagerfläche 53 für Spannbacken 56 der Spannvorrichtung 4 bildet. Der Innenkonus 52 verjüngt sich dabei in Richtung zu dem axialen Ende 55. An dem axialen Ende 55 ist ferner eine Öffnung 54 ausgebildet zur Einführung eines Endbereichs des Gewindebohrers 6. Die Spannbacken 56 (Fig. 17) umfassen jeweils eine Spannfläche 57 und eine Gleitlagerfläche 58. Die Spannfläche 57 weist eine konvexe Oberfläche auf, insbesondere in einem Schnitt senkrecht zu der Zeichenebene von Fig. 16, das heißt mit einer Schnittebene senkrecht zu der zentrischen Längsachse 46. Die Spannflächen 57 der Spannbacken 56 sind dabei parallel zu der zentrischen Längsachse 46 ausgerichtet. Die Gleitlagerfläche 58 jeweils einer Spannbacke 56 liegt auf der Gegengleitlagerfläche 53 der Hülse 51 als Spannmechanismus auf, sodass sich dadurch eine Gleitlagerung zwischen den Gleitlagerflächen 58 der Spannbacken 56 und der Gegengleitlagerfläche 53 als Innenkonus 52 der Hülse 51 ausgebildet. Der Spannmechanismus der Spannvorrichtung 4 umfasst ferner einen nicht dargestellten Spannmechanismus mit einem Spindeltrieb. Dieser Spindeltrieb kann dabei mittels eines Betätigungselements bei einem Stillstand von einem Inbusschlüssel betätigt werden, sodass dadurch die drei Spannbacken 56 in der Axialrichtung 48 bewegt werden können, das heißt mit einer Bewegungsrichtung mit einer Bewegungskomponente in der Axialrichtung 48. Aufgrund der Gleitlagerung der Gleitlagerfläche 58 der Spannbacken 56 an der Gegengleitlagerfläche 53 der Hülse 51 verursacht eine Axialbewegung der Spannbacken 56 in Richtung zu dem axialen Ende 55 zu eine Verkleinerung des radialen Abstandes der Spannflächen 57 zu der zentrischen Längsachse 46. Zur Fixierung von kleinen Gewindebohrern 6 an der Spannvorrichtung 4 sind somit die Spannbacken 56 in Richtung zu dem axialen Ende 55 mit dem Spannmechanismus zu bewegen und zur Fixierung von großen Gewindebohrern 6 sind die Spannbacken 56 in Richtung weg von dem axialen Ende 55 zu bewegen, sodass sich dadurch der radiale Abstand der Spannflächen 57 zu der zentrischen Längsachse 46 vergrößert. Zur kraftschlüssigen Fixierung des Gewindebohrers 6 an einer Außenfläche 71 eines Schaftes des Gewindebohrers 6 außerhalb der Schneidgeometrie 59 und dem Fixierungselement 60, das heißt an dem Schaft zwischen der Schneidgeometrie 59 und dem Fixierungselement 60, kann dabei mittels des Spannmechanismus jeweils eine Spannfläche 57 der Spannbacken 56 mit einer großen Druckkraft auf die Außenfläche 71 des Schafts des Gewindebohrers 6 aufgelegt werden, sodass dadurch eine zuverlässige kraftschlüssige Fixierung des Gewindebohrers 6 an der Spannvorrichtung 4 ausgeführt werden kann. In Fig. 15 sind die Spannbacken 56 nicht dargestellt und das Fixierungselement 60 (strichliert dargestellt) ist noch nicht in der kleineren Gegenfixierungsanordnung 66 mit Gegenfixierungsflächen 65 (strichliert dargestellt) angeordnet.

Die Spannvorrichtung 4 umfasst zusätzlich eine Fixierungsvorrichtung 63 zur formschlüssigen mittelbaren und unmittelbaren Fixierung des Gewindebohrers 6 in Richtung der Drehrichtung 49 an der Spannvorrichtung 4 und zur tangentialen Ausrichtung des Gewindebohrers 6 zu dem Gewindeschneidfutter 1 und der Spannvorrichtung 4. Dadurch kann ein Drehmoment zusätzlich mittels der formschlüssigen Fixierung ein Drehmoment von der Spannvorrichtung 4 auf den Gewindebohrer 6 aufgebracht werden. Die Fixierungsvorrichtung 63 (Fig. 15, 16, 18 und 19) umfasst zwei Gegenfixierungsanordnungen 66. Je eine Gegenfixierungsanordnung 66 weist vier ebene Gegenfixierungsflächen 65 auf und die Gegenfixierungsflächen 65 sind zu benachbarten Gegenfixierungsflächen 65 jeweils in einem rechten Winkel ausgerichtet. Jeweils zwei gegenüberliegende Gegenfixierungsflächen 65 sind parallel zueinander ausgerichtet. Die Gegenfixierungsflächen 65 sind an je einem Gegenfixierungselement 64 ausgebildet und in dem ersten Ausführungsbeispiel der Fixierungsvorrichtung 63 gemäß Fig. 15, 16, 18 und 19 sind dabei die Gegenfixierungselemente 64 einteilig ausgebildet. Die Gegenfixierungsanordnung 66 mit dem kleineren Abstand zu dem axialen Ende 55 weist dabei einen größeren Abstand zwischen den gegenüberliegenden Gegenfixierungsflächen 65 auf. Damit können an der Fixierungsvorrichtung 63 Fixierungselemente 60 in zwei unterschiedlichen Größen an der Fixierungsvorrichtung 63 unmittelbar formschlüssig befestigt und fixiert werden indem die Fixierungsflächen 61 des Gewindebohrers 6 unmittelbar auf die Gegenfixierungsflächen 65 der Fixierungsvorrichtung 63 aufgelegt werden. Die Geometrie der Gegenfixierungsflächen 65 ist damit komplementär zur Geometrie des Fixierungselements 60 ausgebildet. Aus Vereinfachungsgründen sind in dem beschriebenen ersten Ausführungsbeispiel der Fixierungsvorrichtung 63 lediglich zwei Gegenfixierungsanordnungen 66 für Gewindebohrer 6 in zwei unterschiedlichen Größen dargestellt. In der Praxis jedoch weisen derartige Fixierungsvorrichtungen 63 eine große Anzahl an Gegenfixierungsanordnungen 66 auf, beispielsweise 10 bis 20 Gegenfixierungsanordnungen 66, sodass dadurch eine große Anzahl an Gewindebohrern 6 in unterschiedlichen Größen, das heißt beispielsweise Gewindebohrer 6 in 10 bis 20 unterschiedlichen Größen, an der Fixierungsvorrichtung 63 formschlüssig zur Übertragung eines Drehmoments befestigt werden können.

Abweichend hiervon kann das Fixierungselement 60 mit einem einfach ausgebildeten Adapter (nicht dargestellt) mittelbar formschlüssig den Gegenfixierungsflächen 65 der Fixierungsvorrichtung 63 fixiert werden. Der Adapter dient dazu, an großen Fixierungsvorrichtungen 63 und/oder großen Gegenfixierungsanordnungen 66 mit einem großen Abstand von gegenüberliegenden Gegenfixierungsflächen 65 Gewindebohrer 6 mit einem kleinen Fixierungselement 60 mit einem kleinen Abstand von gegenüberliegenden Fixierungsflächen 61 befestigen zu können. Der Adapter weist hierzu entsprechende erste Adapterfixierungsflächen zur formschlüssigen Fixierung an der Fixierungsvorrichtung 63 und zweite Adapterfixierungsflächen zur formschlüssigen Fixierung an dem Fixierungselement 60 auf. Die ersten Adapterfixierungsflächen sind komplementär zu den vier Gegenfixierungsflächen 65 ausgebildet. Die zweiten Adapterfixierungsflächen sind komplementär zu den vier Fixierungsflächen 61 ausgebildet. Dabei ist es auch möglich, sofern die Gewindebohrer 6 ausschließlich mittels des Adapters an der Fixierungsvorrichtung 63 mittelbar formschlüssig befestigt werden, die Geometrie der Gegenfixierungsflächen 65 der Fixierungsvorrichtung 63 und der ersten Adapterfixierungsflächen des Adapters beliebig abweichend von dieser Beschreibung auszubilden. Die Spannvorrichtung 4 umfasst vorzugsweise mehrere Adapter in unterschiedlichen Größen.

In Fig. 20 und 21 ist ein zweites Ausführungsbeispiel der Fixierungsvorrichtung 63 dargestellt. Im Nachfolgenden werden im Wesentlichen nur die Unterschiede zu dem ersten Ausführungsbeispiel gemäß Fig. 18 und 19 beschrieben. Die Fixierungsvorrichtung 63 weist in dem Schnitt gemäß Fig. 20 außerhalb der Gegenfixierungsflächen 65 eine sich konisch vergrößernde Öffnung auf in Richtung zu dem axialen Ende 55. Die formschlüssige Fixierung des Fixierungselements 60 erfolgt dabei lediglich an einem Teilbereich der Fixierungsflächen 61 im Bereich der Fasen 62 des Gewindebohrers 6. Hierzu sind die Paare von zwei Gegenfixierungsflächen 65 in einem rechten Winkel zueinander ausgerichtet und die Paare von den Gegenfixierungsflächen 65 weisen in der Axialrichtung 48 in Richtung zu dem axialen Ende 55 eine konisch sich öffnende Geometrie auf. Die insgesamt vier Paare von Gegenfixierungsflächen 65, das heißt in der Summe insgesamt acht Gegenfixierungsflächen 65, ermöglichen somit die formschlüssige Fixierung zur Übertragung des Drehmoments an den Fixierungsflächen 61 des Gewindebohrers 6 im Bereich der Fasen 62. Mittig zwischen den Fasen 62 an den Fixierungsflächen 61 liegt somit auf den Fixierungsflächen 61 keine Gegenfixierungsfläche 65 der Fixierungsvorrichtung 63 auf.

In Fig. 22 ist ein drittes Ausführungsbeispiel der Fixierungsvorrichtung 63 dargestellt. Im Nachfolgenden werden im Wesentlichen nur die Unterschiede zu dem ersten Ausführungsbeispiel der Fixierungsvorrichtung 63 beschrieben. Die Gegenfixierungselemente 63 sind als gesonderte Bauteile ausgebildet, das heißt, an jeder der vier Gegenfixierungselemente 64 als getrennte Bauteile ist jeweils eine Gegenfixierungsfläche 65 ausgebildet. Die Gegenfixierungselemente 64 können mit einem nicht dargestellten Zusatzmechanismus in Radialrichtung 50 bewegt werden, sodass sich dadurch die Abstände zwischen den Gegenfixierungsflächen 65 verändern zur Anpassung an Gewindebohrern 6 in unterschiedlichen Größen. Die Gegenfixierungsflächen 65 liegen dabei zur formschlüssigen Fixierung des Gewindebohrers 6 auf den Fixierungsflächen 61 auf. Die Größe der Gegenfixierungsflächen 65 ist dabei dahingehend ausgebildet, dass diese bei größeren Gewindebohrern 6 nur einen Teil der Fixierungsflächen 61 des Fixierungselements 60 des Gewindebohrers 6 abdecken und/oder die Größe der Gegenfixierungsflächen 65 ist mechanisch veränderbar. Der Stellmechanismus kann entweder manuell betätigt werden oder mittels eines Aktuators, beispielsweise eines Elektromotors.

In Fig. 23 ist eine Vorderansicht der Spannvorrichtung 4 mit Spannbacken 56 dargestellt, die je zwei Spannflächen 57 pro Spannbacken 56 aufweisen.

Fig. 24 zeigt detailliert die Geometrie eines Spannbackens 56 mit zwei Spannflächen 57 in einem zweiten Ausführungsbeispiel, die auf einer Außenfläche 71 eines Schaftes des Gewindebohrers 6 aufliegen zur kraftschlüssigen Fixierung des Gewindebohrers 6. An der Spannbacke 56 ist eine erste Spannfläche 67 und eine zweite Spannfläche 68 an je einem radialen Vorsprung 72 ausgebildet und in Tangentialrichtung 49 zwischen den radialen Vorsprüngen 72 ist ein radiale Aussparung 73 ausgebildet. Die radialen Vorsprünge 72 und die radiale Aussparung 73 erstrecken sich in Richtung der Längsachse 46 in Axialrichtung 48 an dem Spannbacken 56. Die radialen Vorsprünge 72 sind in einem Schnitt gemäß Fig. 24 senkrecht zu der Längsachse 46 des Gewindeschneidfutters 1 an den radialen Endbereichen konvex gekrümmt ausgebildet, so dass die Außenfläche 71 des Gewindebohrers 6 an der ersten Spannfläche 67 an einer ersten linien- oder streifenförmigen Kontaktfläche 69 auf der Außenfläche 71 aufliegt und an der zweiten Spannfläche 68 an einer zweiten linien- oder streifenförmigen Kontaktfläche 70 auf der Außenfläche 71 aufliegt. Die Geometrie der zwei Spannflächen 57, 67, 68 ist auf die unterschiedlichen Krümmungsradien der Außenflächen 71 von Gewindebohrern 6 mit einem Schaft mit unterschiedlichen Durchmessern abgestimmt, so dass die Außenflächen 71 stets an den konvex gekrümmten Spannflächen 67, 68 aufliegen. Eine Mittelebene 74 parallel zu der Längsachse 46 und mittig durch den Spannbacken 56 ist eine Symmetrieebene des Spannbackens 56. Die der zentrischen Längsachse 46 und Rotationsachse 47 zugewandte Seite des Spannbackens 56 weist somit an der ersten und zweiten Spannfläche 67, 68 einen minimalen radialen Abstand zu der Längsachse 46 und der Rotationsachse 47 auf und an der Aussparung 73 einen maximalen radialen Abstand zu der Längsachse 46 und der Rotationsachse 47 auf. Der minimale radiale Abstand sämtlicher Spannflächen 67, 68 sämtlicher drei Spannbacken 56 in Axialrichtung 48 in Richtung der Längsachse 46 ist konstant und vorzugsweise ist auch der maximale radiale Abstand sämtlicher Aussparungen 73 sämtlicher drei Spannbacken 56 in Axialrichtung 48 in Richtung der Längsachse 46 konstant.

Fig. 25 zeigt detailliert die Geometrie eines Spannbackens 56 mit zwei Spannflächen 57 in einem dritten Ausführungsbeispiel, die auf einer Außenfläche 71 eines Schaftes des Gewindebohrers 6 aufliegen zur kraftschlüssigen Fixierung des Gewindebohrers 6. Im Nachfolgenden werden im Wesentlichen nur die Unterschiede zu dem zweiten Ausführungsbeispiel gemäß Fig. 24 beschrieben. Die erste und zweite Spannfläche 67, 68 sind als ebene Flächen ausgebildet an im Querschnitt im Wesentlichen dreiecksförmigen Vorsprüngen 72. Die ebenen Spannflächen 67, 68 sind dahingehend in einem spitzen Winkel zu einer Mittelebene 74 parallel zu der Längsachse 46 und mittig durch den Spannbacken 56 ausgerichtet, so dass die Ausnehmung 73 in Tangentialrichtung 49 zwischen den zwei Vorsprüngen 72 ausgebildet ist. Die Mittelebene 74 ist auch eine Symmetrieebene des Spannbackens 56 in dem dritten Ausführungsbeispiel.

Insgesamt betrachtet sind mit dem erfindungsgemäßen Gewindeschneidfutter 1 wesentliche Vorteile verbunden. Mittels der Spannvorrichtung 4 können Gewindebohrer 6 in unterschiedlichen Größen zuverlässig formschlüssig und kraftschlüssig an der Spannvorrichtung 4 befestigt werden. Gewindebohrer 6 in unterschiedlichen Größen, das heißt insbesondere mit einem unterschiedlichen Durchmesser des Schafts und einem unterschiedlichen Abstand zwischen den gegenüberliegenden Fixierungsflächen 61 der Fixierungselemente 60 der Gewindebohrer 6, können ohne einen Austausch von Teilen der Spannvorrichtung 4 einfach, zuverlässig und preiswert an der Spannvorrichtung 4 fixiert werden.

## Patentansprüche

1. Gewindeschneidfutter (1) zum Synchron-Gewindeschneiden, umfassend
- einen Aufnahmeschaft (2) als Komponente (5) des Gewindeschneidfutters (1) zum maschinenseitigen Antrieb,
- ein Zwischenteil (3) als Komponente (5) des Gewindeschneidfutters (1),
- eine Spannvorrichtung (4) als Komponente (5) des Gewindeschneidfutters (1) zur kraftschlüssigen Fixierung eines Gewindebohrers (6),
- wobei mit dem Zwischenteil (3) der Aufnahmeschaft (2) mit der Spannvorrichtung (4) verbunden ist,
- wenigstens ein Elastomerelement (7) zur Abfederung eines axialen Spiels in Axialrichtung (48) des Gewindeschneidfutters (1) und eines tangentialen Spiels in Drehrichtung (49) des Gewindeschneidfutters (1) zwischen dem Aufnahmeschaft (2) und der Spannvorrichtung (4) aufgrund der elastischen Eigenschaften des Elastomerelementes (7),
- einen axialen Anschlag zur Begrenzung des abgefederten axialen Spiels mit einem ersten Axialanschlagelement (23) und einem zweiten Axialanschlagelement (24) und einen tangentialen Anschlag zur Begrenzung des abgefederten tangentialen Spiels mit einem ersten Tangentialanschlagelement (25) und einem zweiten Tangentialanschlagelement (26),
- eine Fixierungsvorrichtung (63) zur formschlüssigen Fixierung des Gewindebohrers (6) in Drehrichtung (49) des Gewindebohrers (6) an der Spannvorrichtung (4),
**dadurch gekennzeichnet, dass**
die Spannvorrichtung (4) drei in Radialrichtung (50) mit einem Spannmechanismus bewegliche Spannbacken (56) zur kraftschlüssigen Fixierung des Gewindebohrers (6) umfasst.

2. Gewindeschneidfutter nach Anspruch 1,
**dadurch gekennzeichnet, dass**
die drei Spannbacken (56) in Axialrichtung (48) mit dem Spannmechanismus beweglich sind.

3. Gewindeschneidfutter nach Anspruch 1 oder 2,
**dadurch gekennzeichnet, dass**
der Spannmechanismus einen Spindeltrieb zur Bewegung der drei Spannbacken (56) in Axialrichtung (48) umfasst.

4. Gewindeschneidfutter nach Anspruch 3,
**dadurch gekennzeichnet, dass**
an der Spannvorrichtung (4) eine Lagerung zur beweglichen Lagerung der Spannbacken in einer Bewegungsrichtung der Spannbacken (56) in einem spitzen Winkel zu der Axialrichtung (48) umfasst.

5. Gewindeschneidfutter nach Anspruch 4,
**dadurch gekennzeichnet, dass**
die Lagerung als eine Gleitlagerung (53) ausgebildet ist.

6. Gewindeschneidfutter nach einem oder mehreren der vorhergehenden Ansprüche,
**dadurch gekennzeichnet, dass**
aufgrund der Lagerung die Spannbacken (56) bei einer Bewegung der Spannbacken (56) mit einer Bewegungskomponente in Axialrichtung (48) in einer Richtung zu einem axialen Ende (55) der Spannvorrichtung sich der radiale Abstand der Spannbacken (56) zu einer zentrischen Längsachse (46) der Spannvorrichtung (4) verkleinert und umgekehrt.

7. Gewindeschneidfutter nach einem oder mehreren der vorhergehenden Ansprüche,
**dadurch gekennzeichnet, dass**
die Geometrie der Fixierungsvorrichtung (63) im Wesentlichen komplementär zu einem im Querschnitt im Wesentlichen quadratischen Fixierungselement (60) mit vier ebenen Fixierungsflächen (61) des Gewindebohrers (6) ausgebildet ist.

8. Gewindeschneidfutter nach einem oder mehreren der vorhergehenden Ansprüche,
**dadurch gekennzeichnet, dass**
die Fixierungsvorrichtung (63) vier Gegenfixierungselemente (64) mit vier ebenen Gegenfixierungsflächen (65) als Gegenfixierungsanordnung (66) aufweist und jeweils zwei der vier Gegenfixierungsflächen (65) parallel zueinander ausgerichtet sind, so dass die Gegenfixierungsflächen (65) der Gegenfixierungselemente (64) auf die Fixierungsflächen (61) des Fixierungselementes (60), vorzugsweise mit einer Druckkraft, auflegbar sind.

9. Gewindeschneidfutter nach Anspruch 8,
**dadurch gekennzeichnet, dass**
die Fixierungsvorrichtung (63) mehrere in Axialrichtung (48) nacheinander ausgebildete Gegenfixierungsanordnungen (66) aufweist für Fixierungselemente (60) der Gewindebohrer (6) in unterschiedlichen Größen.

10. Gewindeschneidfutter nach Anspruch 8,
**dadurch gekennzeichnet, dass**
der Abstand zwischen je zwei gegenüberliegenden Gegenfixierungsflächen (65) der Gegenfixierungsanordnungen (66) desto größer ist, desto kleiner der Abstand der Gegenfixierungsanordnungen (66) zu einem axialen Ende (55) der Spannvorrichtung (4) ist.

11. Gewindeschneidfutter nach einem oder mehreren der Ansprüche 8 bis 10,
**dadurch gekennzeichnet, dass**
der Abstand zwischen je zwei gegenüberliegenden Gegenfixierungsflächen (65) der Gegenfixierungselemente (64) mittels eines Stellmechanismus veränderbar ist zur Anpassung an Fixierungselemente (60) der Gewindebohrer (6) in unterschiedlichen Größen.

12. Gewindeschneidfutter nach einem oder mehreren der vorhergehenden Ansprüche,
**dadurch gekennzeichnet, dass**
die einer zentrischen Längsachse (48) des Gewindeschneidfutters (1) zugewandten Seiten der Spannbacken (56) je zwei Vorsprünge (72) und je eine Aussparung (73) aufweisen und die je eine Aussparung (73) in Tangentialrichtung (49) zwischen den je zwei Vorsprüngen (72) ausgebildet ist, so dass an jedem der je zwei Vorsprüngen (72) eine Spannfläche (57, 67, 68) ausgebildet ist zum Auflegen und kraftschlüssigen Fixieren einer Außenfläche (71) eines Schaftes des Gewindebohrers (6).

13. Gewindeschneidfutter nach Anspruch 12,
**dadurch gekennzeichnet, dass**
die Außenfläche (71) des Schaftes des Gewindebohrers (6) mit linien- oder streifenförmigen Kontaktflächen (69, 70), insbesondere wenigstens sechs linien- oder streifenförmigen Kontaktflächen (69, 70), zwischen den Spannflächen (57, 67, 68) und der Außenfläche (71) des Schaftes des Gewindebohrers (6) kraftschlüssig fixierbar ist.

14. Gewindeschneidfutter nach einem oder mehreren der vorhergehenden Ansprüche,
**dadurch gekennzeichnet, dass**
das wenigstens eine Elastomerelement aus einem Elastomer und/oder aus Kunststoff mit einem Elastizitätsmodul des Elastomers und/oder des Kunststoffes zwischen 0,05 GPa und 10 GPa ausgebildet ist.

15. Gewindeschneidfutter nach einem oder mehreren der vorhergehenden Ansprüche,
**dadurch gekennzeichnet, dass**
das wenigstens eine Elastomerelement als Feder, insbesondere eine Tellerfeder und/oder Spiralfeder, ausgebildet ist

## Claims

1. Thread-cutting chuck (1) for synchronous thread cutting, comprising
- a receiving shank (2) as a component (5) of the tapping chuck (1) for the machine-side drive,
- an intermediate part (3) as a component (5) of the thread-cutting chuck (1),
- a clamping device (4) as a component (5) of the thread-cutting chuck (1) for the force-fit fixation of a tap (6),
- whereby with the intermediate part (3) the receiving shank (2) is connected to the clamping device (4),
- at least one elastomer element (7) for spring suspension of an axial clearance in the axial direction (48) of the thread-cutting chuck (1) and tangential clearance in the direction of rotation (49) of the thread-cutting chuck (1) between the receiving shank (2) and the clamping device (4) due to the elastic properties of the elastomer element (7),
- an axial stop for limiting the spring-suspended axial clearance with a first axial stop element (23) and a second axial stop element (24) and a tangential stop for limiting the spring-suspended tangential clearance with a first tangential stop element (25) and a second tangential stop element (26),
- a fixing device (63) for the form-fitting fixation of the tap (6) in the direction of rotation (49) of the tap (6) to the clamping device (4),
**characterized in that**
the clamping device (4) comprises three clamping jaws (56) movable in the radial direction (50) with a clamping mechanism for the force-fit fixation of the tap (6).

2. Thread-cutting chuck according to claim 1,
**characterized in that**
the three clamping jaws (56) are movable in the axial direction (48) with the clamping mechanism.

3. Thread-cutting chuck according to claim 1 or 2,
**characterized in that**
the clamping mechanism comprises a spindle drive for moving the three clamping jaws (56) in the axial direction (48).

4. Thread-cutting chuck according to claim 3,
**characterized in that**
the clamping device (4) comprises a bearing for the movable bearing of the clamping jaws (56) in one direction of movement of the clamping jaws (56) at an acute angle to the axial direction (48).

5. Thread-cutting chuck according to claim 4,
**characterized in that**
the bearing is designed as a plain bearing (53).

6. Thread-cutting chuck according to one or more of the preceding claims,
**characterized in that**
due to the bearing of the clamping jaws (56) with a movement component in the axial direction (48) in a direction to an axial end (55) of the clamping device (4), the radial distance of the clamping jaws (56) to a centric longitudinal axis (46) of the clamping device (4) is reduced and vice versa.

7. Thread-cutting chuck according to one or more of the preceding claims,
**characterized in that**
the geometry of the fixing device (63) is in the main complementary to a fixing element (60) of the tap (6), which is in the main square in cross-section, with four plane fixing surfaces (61).

8. Thread-cutting chuck according to one or more of the preceding claims,
**characterized in that**
the fixing device (63) comprises four counter-fixing elements (64) with four plane counter-fixing surfaces (65) as a counter-fixation arrangement (66) and in each case two of the four counter-fixing surfaces (65) are aligned parallel to each other, so that the counter-fixation surfaces (65) of the counter-fixing elements (64) can be laid on the fixation surfaces (61) of the fixation elements (60), preferably with a compressive force.

9. Thread-cutting chuck according to claim 8,
**characterized in that**
the fixing device (63) has several counter-fixation arrangements (66) formed one after the other in axial direction (48) for fixing elements (60) of the taps (6) in different sizes.

10. Thread-cutting chuck according to claim 8,
**characterized in that**
the distance between each two opposing counter-fixation surfaces (65) of the counter-fixation arrangements (66) is the greater, the smaller the distance is between the counter-fixation arrangements (66) to an axial end (55) of the clamping device (4).

11. Thread-cutting chuck according to one or more of claims 8 to 10,
**characterized in that**
the distance between each two opposing counter-fixation surfaces (65) of the counter-fixing elements (64) is changeable by means of an adjustment mechanism for the adaptation to fixing elements (60) of the taps (6) in different sizes.

12. Thread-cutting chuck according to one or more of the preceding claims,
**characterized in that**
the sides of the clamping jaws (56) facing to a centric longitudinal axis (48) of the thread-cutting chuck (1) each have two protrusions (72) and one recess (73) and each recess (73) is designed in the tangential direction (49) between each of the two protrusions (72), so that at each of the two protrusions (72) a clamping surface (57, 67, 68) is designed for the laying and force-fit fixation of an outer surface (71) of a shank of the tap (6).

13. Thread-cutting chuck according to claim 12
**characterized in that**,
the outer surface (71) of the shank of the tap (6) with linear-shaped or strip-shaped contact surfaces (69, 70), in particular at least six linear-shped or strip-shaped contact surfaces (69, 70), between the clamping surfaces (57, 67, 68) and the outer surface (71) of the shank of the tap (6) is fixable in a force-fit manner.

14. Thread-cutting chuck according to one or more of the preceding claims,
**characterized in that**
at least one elastomer element is formed of an elastomer and/or of plastic with a modulus of elasticity of the elastomer and/or plastic between 0.05 GPa and 10 GPa.

15. Thread-cutting chuck according to one or more of the preceding claims,
**characterized in that**
at least one elastomer element is formed as a spring, in particular a disc spring and/or a spiral spring.

## Revendications

1. Mandrin de taraudage (1) pour le taraudage synchrone, comprenant
- une tige de réception (2) comme composant (5) du mandrin de taraudage (1) pour l'entraînement côté machine,
- une pièce intermédiaire (3) comme composant (5) du mandrin de taraudage (1),
- un dispositif de serrage (4) comme composant (5) du mandrin de taraudage (1) pour la fixation à force d'un taraud (6),
- dans lequel la tige de réception (2) est reliée au dispositif de serrage (4) au moyen de la pièce intermédiaire (3),
- au moins un élément élastomère (7) pour l'amortissement d'un jeu axial dans la direction axiale (48) du mandrin de taraudage (1) et d'un jeu tangentiel dans le sens de rotation (49) du mandrin de taraudage (1) entre la tige de réception (2) et le dispositif de serrage (4) en raison des propriétés élastiques de l'élément élastomère (7),
- une butée axiale pour la limitation du jeu axial amorti comportant un premier élément de butée axiale (23) et un second élément de butée axiale (24) et une butée tangentielle pour la limitation du jeu tangentiel amorti comportant un premier élément de butée tangentielle (25) et un second élément de butée tangentielle (26),
- un dispositif de fixation (63) pour la fixation par complémentarité de forme du taraud (6) dans le sens de rotation (49) du taraud (6) sur le dispositif de serrage (4),
**caractérisé en ce que**
le dispositif de serrage (4) comprend trois mâchoires de serrage (56) pouvant être déplacées dans la direction radiale (50) avec un mécanisme de serrage pour la fixation à force du taraud (6).

2. Mandrin de taraudage selon la revendication 1,
**caractérisé en ce que**
les trois mâchoires de serrage (56) peuvent être déplacées dans la direction axiale (48) avec le mécanisme de serrage.

3. Mandrin de taraudage selon la revendication 1 ou 2,
**caractérisé en ce que**
le mécanisme de serrage comprend un entraînement à broche pour le déplacement des trois mâchoires de serrage (56) dans la direction axiale (48).

4. Mandrin de taraudage selon la revendication 3,
**caractérisé en ce que**
sur le dispositif de serrage (4) comprend un palier pour le montage mobile des mâchoires de serrage dans une direction de déplacement des mâchoires de serrage (56) selon un angle aigu par rapport à la direction axiale (48).

5. Mandrin de taraudage selon la revendication 4,
**caractérisé en ce que**
le palier est réalisé comme un palier lisse (53).

6. Mandrin de taraudage selon une ou plusieurs des revendications précédentes,
**caractérisé en ce que**
en raison du palier des mâchoires de serrage (56), lors d'un déplacement des mâchoires de serrage (56) avec une composante de déplacement dans la direction axiale (48) dans une direction vers une extrémité axiale (55) du dispositif de serrage, la distance radiale entre les mâchoires de serrage (56) et un axe longitudinal central (46) du dispositif de serrage (4) diminue et inversement.

7. Mandrin de taraudage selon une ou plusieurs des revendications précédentes,
**caractérisé en ce que**
la géométrie du dispositif de fixation (63) est réalisée de manière à être sensiblement complémentaire d'un élément de fixation (60) sensiblement carré en section transversale et comportant quatre surfaces de fixation (61) planes du taraud (6).

8. Mandrin de taraudage selon une ou plusieurs des revendications précédentes,
**caractérisé en ce que**
le dispositif de fixation (63) présente quatre éléments de contre-fixation (64) comportant quatre surfaces de contre-fixation (65) planes comme agencement de contre-fixation (66) et respectivement deux des quatre surfaces de contre-fixation (65) sont orientées parallèlement l'une à l'autre, de sorte que les surfaces de contre-fixation (65) des éléments de contre-fixation (64) peuvent être posées sur les surfaces de fixation (61) de l'élément de fixation (60), de préférence avec une force de pression.

9. Mandrin de taraudage selon la revendication 8,
**caractérisé en ce que**
le dispositif de fixation (63) présente plusieurs agencements de contre-fixation (66) réalisés successivement dans la direction axiale (48) pour des éléments de fixation (60) des tarauds (6) de différentes tailles.

10. Mandrin de taraudage selon la revendication 8,
**caractérisé en ce que**
la distance entre respectivement deux surfaces de contre-fixation (65) opposées des agencements de contre-fixation (66) est d'autant plus grande que la distance entre les agencements de contre-fixation (66) et une extrémité axiale (55) du dispositif de serrage (4) est petite.

11. Mandrin de taraudage selon une ou plusieurs des revendications 8 à 10,
**caractérisé en ce que**
la distance entre respectivement deux surfaces de contre-fixation (65) opposées des éléments de contre-fixation (64) peut être modifiée au moyen d'un mécanisme de réglage pour l'adaptation à des éléments de fixation (60) des tarauds (6) de différentes tailles.

12. Mandrin de taraudage selon une ou plusieurs des revendications précédentes,
**caractérisé en ce que**
les côtés des mâchoires de serrage (56) tournés vers un axe longitudinal central (48) du mandrin de taraudage (1) présentent respectivement deux saillies (72) et respectivement un évidement (73) et l'évidement (73) respectif est réalisé dans la direction tangentielle (49) entre les deux saillies (72) respectives, de sorte qu'une surface de serrage (57, 67, 68) est réalisée sur chacune des deux saillies (72) respectives pour la pose et la fixation à force d'une surface extérieure (71) d'une tige du taraud (6).

13. Mandrin de taraudage selon la revendication 12,
**caractérisé en ce que**
la surface extérieure (71) de la tige du taraud (6) peut être fixée à force avec des surfaces de contact (69, 70) en forme de lignes ou de bandes, en particulier au moins six surfaces de contact (69, 70) en forme de lignes ou de bandes, entre les surfaces de serrage (57, 67, 68) et la surface extérieure (71) de la tige du taraud (6).

14. Mandrin de taraudage selon une ou plusieurs des revendications précédentes,
**caractérisé en ce que**
l'au moins un élément élastomère est réalisé à partir d'un élastomère et/ou d'une matière plastique avec un module d'élasticité de l'élastomère et/ou de la matière plastique compris entre 0,05 GPa et 10 GPa.

15. Mandrin de taraudage selon une ou plusieurs des revendications précédentes,
**caractérisé en ce que**
l'au moins un élément élastomère est réalisé sous forme de ressort, en particulier de rondelle-ressort et/ou de ressort en spirale.
